# EUROPÄISCHE PATENTANMELDUNG

(11) **EP 4 599 962 A1**
(43) Veröffentlichungstag der Anmeldung: **13.08.2025**
(21) Anmeldenummer: 24215025.8
(22) Anmeldetag: 25.11.2024
(51) Int. Cl.: B23B 31/26

(54) **UNIVERSELLES SPANNSYSTEM**

(30) Priorität: 27.12.2023 DE 102023136700
(71) Anmelder: Franz Haimer Maschinenbau KG, 86568 Hollenbach-Igenhausen (DE)
(72) Erfinder: Haimer, Franz, 86568 Hollenbach-Igenhausen (DE)
(74) Vertreter: Schwarz, Wolfgang

(57) **Zusammenfassung**

Die Erfindung vorsieht eine erste Spannvorrichtung zum Spannen oder Lösen eines Bauteils und eine zweite Spannvorrichtung zum Halten der ersten Spannvorrichtung, wobei die erste Spannvorrichtung als Spannadapter zwischen des Bauteils und der maschinenseitigen zweiten Spannvorrichtung dient und wobei beim Spannen oder Lösen des Bauteils am Spannadapter auch der Spannadapter selbst durch die Betätigung des Spannmechanismus an der maschinenseitigen zweiten Spannvorrichtung spannbar bzw. lösbar ist.

## Beschreibung

Die Erfindung betrifft einen **Spannadapter** zum Spannen eines Bauteils, ein **Maschinenelement** zum Spannen eines ein Bauteil spannbaren Spannadapters, **Spannsysteme** zum Spannen eines Bauteils an einem Maschinenelement einer Bearbeitungs- und/oder Messmaschine und eine **Bearbeitungs- und/oder Messmaschine** zum Bearbeiten und/oder Vermessen eines Bauteils sowie **Verfahren** zum Spannen oder Lösen eines Bauteils an einem Maschinenelement einer Bearbeitungs- und/oder Messmaschine.

Aus der DE 10 2019 124 418 A1 sind gattungsgemäße Gegenstände, wie ein gattungsgemäßer Spannadapter zum Spannen eines Bauteils sowie gattungsgemäße Spannsysteme mit einem solchen Spannadapter und einem den Spannadapter aufnehmenden Maschinenelement bekannt.

Dieser Spannadapter zum Spannen eines Bauteils, im Speziellen hier ein Wuchtadapter, d.h. ein Spannadapter zum Spannen von auszuwuchtenden Bauteilen/Werkstücken, wie beispielsweise Fräswerkzeuge, Werkzeugaufnahmen oder Riemenscheiben, an einer Wuchtmaschine sieht ein (Spannadapter-)Gehäuseteil, eine in dem (Spannadapter-)Gehäuseteil aufgenommene, das Bauteil spannbaren Spannvorrichtung und ein erstes die Spannvorrichtung betätigbares Betätigungselement vor.

Weiter zeigt die DE 10 2019 124 418 A1 auch das Maschinenelement, d.h. hier eine Antriebsspindel der Wuchtmaschine, mit einem (Maschinenelement-)Gehäuseteil, einer in dem (Maschinenelement-)Gehäuseteil aufgenommenen Betätigungsvorrichtung und einem zweiten die Betätigungsvorrichtung betätigbaren Betätigungselement.

Um das auszuwuchtende Werkstück zu spannen, wird der Wuchtadapter mit dem (Maschinenelement-)Gehäuseteil verschraubt. Das erste und das zweite Betätigungselement werden ebenfalls miteinander verschraubt. Durch Betätigung der Betätigungsvorrichtung mittels des zweiten Betätigungselements spannt - über erstes und verbundenes zweites Betätigungselement - die erste Spannvorrichtung das auszuwuchtende Bauteil.

Nachteilig bei diesem Spannsystem aus Spannadapter und Maschinenelement bei der DE 10 2019 124 418 A1 ist, dass bereits vor dem Spannen eines Bauteils der das bauteilaufnehmende Spannadapter bereits fest in dem Maschinenelement aufgenommen (hier verschraubt) sein muss bzw. nach dem Lösen des Bauteils aus seiner Verspannung in dem Spannadapter der Spannadapter noch fest in dem Maschinenelement aufgenommen ist.

Dies führt nachteilig weiter dazu, dass Umrüstzeiten verlängert und ein Automatisierungsgrad verringert werden, erfordern nämlich Bearbeitungsprozesse mit wechselnden Bauteilen und so angepassten, wechselnden Spannadaptern in der Regel eine Umrüstung von Spannadaptern (hier im Falle der DE 10 2019 124 418 A1 durch das hier notwendige Lösen der Verschraubung und erneutes (Wieder-)Verschrauben des Spannadapters) .

Verbesserung schafft ein Spannsystem aus Wuchtadapter bzw. Spannadapter und Maschinenelement, aus der DE 10 2007 036 144 A1.

Hier sieht der Spannadapter - ebenfalls - einen Wuchtadapter eines Spannsystems aus einem ein auszuwuchtendes Bauteil spannenden Wuchtadapter und einer den Spannadapter aufnehmenden Antriebsspindel (Maschinenelement) - ein (Spannadapter-)Gehäuseteil, eine in dem (Spannadapter-)Gehäuseteil aufgenommene, das Bauteil spannbare Spannvorrichtung und ein erstes die Spannvorrichtung betätigbares Betätigungselement vor.

Weiter zeigt die DE 10 2007 036 144 A1 auch ein Maschinenelement, d.h. hier wiederum eine Antriebsspindel einer Wuchtmaschine, mit einem (Maschinenelement-)Gehäuseteil, einer in dem (Maschinenelement-)Gehäuseteil aufgenommenen Betätigungsvorrichtung und einem zweiten die Betätigungsvorrichtung betätigbaren Betätigungselement.

Um das auszuwuchtende Werkstück hier zu spannen, wird der Wuchtadapter wiederum mit dem (Maschinenelement-)Gehäuseteil verschraubt. Das erste und das zweite Betätigungselement werden ebenfalls miteinander - hier - über eine Kupplung mit Bajonette-Verschluss verbunden. Durch Betätigung der Betätigungsvorrichtung mittels des zweiten Betätigungselements spannt - über erstes und verbundenes zweites Betätigungselement - die erste Spannvorrichtung das auszuwuchtende Bauteil.

Um aber hier den Wucht- bzw. Spannadapter schneller wechseln zu können, sieht die DE 10 2007 036 144 A1 dann vor, dass das (Spannadapter-)Gehäuse zweiteilig ausgeführt ist, nämlich einen mit der Antriebsspindel bzw. dem Maschinenelement verschraubten Grundkörper sowie einen das auszuwuchtende Bauteil spannenden Wechselkörper.

Der Wechselkörper kann - gemäß der DE 10 2007 036 144 A1 - von dem Grundkörper abgekoppelt und abgenommen werden (ohne, dass die Verschraubung des Grundkörpers zu lösen ist) (bzw. vice versa), um ihn gegen einen entsprechenden anderen Wechselkörper - für andere auszuwuchtende Bauteile - auszuwechseln. Dies ermöglicht bei der DE 10 2007 036 144 A1 so schnellere Umrüstzeiten und einen höheren Automatisierungsgrad.

Es ist Aufgabe der Erfindung, die im Stand der Technik bekannten Spannadapter bzw. Spannsysteme weiter zu verbessern, insbesondere zu vereinfachen, sowie eine einfache und doch positionsgenaue, sichere und reproduzierbare Aufnahme und Halterung eines zu spannenden Bauteils sowie schnelle Umrüstzeiten und einen hohen Automatisierungsgrad zu ermöglichen.

Diese Aufgabe wird gelöst durch einen **Spannadapter** zum Spannen eines Bauteils, ein **Maschinenelement** zum Spannen eines ein Bauteil spannbaren Spannadapters, **Spannsysteme** zum Spannen eines Bauteils an einem Maschinenelement einer Bearbeitungs- und/oder Messmaschine und eine **Bearbeitungs- und/oder Messmaschine** zum Bearbeiten und/oder Vermessen eines Bauteils sowie **Verfahren** zum Spannen oder Lösen eines Bauteils an einem Maschinenelement einer Bearbeitungs- und/oder Messmaschine mit den Merkmalen des unabhängigen Anspruchs.

Vorteilhafte Weiterbildungen der Erfindung sind Gegenstand abhängiger Ansprüche sowie der nachfolgenden Beschreibung - und beziehen sich auf den **Spannadapter** zum Spannen eines Bauteils, das **Maschinenelement** zum Spannen eines ein Bauteil spannbaren Spannadapters, die **Spannsysteme** zum Spannen eines Bauteils an einem Maschinenelement einer Bearbeitungs- und/oder Messmaschine und die **Bearbeitungs- und/oder Messmaschine** zum Bearbeiten und/oder Vermessen eines Bauteils sowie auf die **Verfahren** zum Spannen oder Lösen eines Bauteils an einem Maschinenelement einer Bearbeitungs- und/oder Messmaschine.

Gegebenenfalls verwendete Begriffe, wie oben, unten, vorne, hinten, links oder rechts sind - soweit nicht anders explizit definiert - nach üblichem Verständnis zu verstehen. Begriffe, wie radial und axial, sind, soweit verwendet und nicht anders explizit definiert, in Bezug auf Mittel- bzw. Symmetrieachsen hier beschriebener Bauteile/Komponenten zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

### Gegenstand der Erfindung

Der **Spannadapter** zum Spannen eines Bauteils sieht ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement vor.

Weiter sieht der **Spannadapter** vor, dass das erste Betätigungselement Spannfunktionsflächen aufweist, über welche das erste Betätigungselement - mittels einer zweiten Spannvorrichtung eines Maschinenelements einer Bearbeitungs- und/oder Messmaschine - mit einem zweiten die zweite Spannvorrichtung betätigbaren Betätigungselement bei Betätigung des zweiten Betätigungselements koppelbar bzw. lösbar ist.

Hierdurch ist dann das erste Betätigungselement mittels des zweiten Betätigungselements betätigbar - wobei so bei der Betätigung des zweiten Betätigungselements auch der Spannadapter an dem Maschinenelement spann- bzw. lösbar ist.

Das **Maschinenelement** zum Spannen eines ein Bauteil spannbaren Spannadapters, insbesondere des **Spannadapters,** sieht ein (Maschinenelement-)Gehäuseteil, eine zweite in dem (Maschinenelement-)Gehäuseteil aufgenommene Spannvorrichtung, mittels welcher ein erstes Betätigungselement einer ersten Spannvorrichtung des ein Bauteil spannbaren Spannadapters spann- bzw. lösbar ist, und ein zweites die zweite Spannvorrichtung betätigbares Betätigungselement vor.

Hierdurch ist dann das erste Betätigungselement mittels des zweiten Betätigungselements betätigbar - wobei dabei/bei der Betätigung des zweiten Betätigungselements auch der Spannadapter an dem Maschinenelement spann- bzw. lösbar ist.

Das **Spannsystem** zum Spannen eines Bauteils an einem Maschinenelement einer Bearbeitungs- und/oder Messmaschine sieht einen Spannadapter, insbesondere den **Spannadapter,** und ein Maschinenelement, insbesondere das **Maschinenelement,** vor.

Der **Spannadapter** weist ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement auf. Das **Maschinenelement** weist ein (Maschinenelement-)Gehäuseteil, eine zweite in dem (Maschinenelement-)Gehäuseteil aufgenommene Spannvorrichtung und ein zweites die zweite Spannvorrichtung betätigbares Betätigungselement auf.

Das erste Betätigungselement ist mit dem zweiten Betätigungselement - bei Betätigung des zweiten Betätigungselements - derart miteinander koppelbar bzw. voneinander lösbar, dass - bei Betätigung des zweiten Betätigungselements - sowohl das Bauteil in dem Spannadapter als auch der Spannadapter an dem Maschinenelement spannbar bzw. lösbar sind.

Das weitere erfindungsgemäße **Spannsystem** zum Spannen eines Bauteils an einem Maschinenelement einer Bearbeitungs- und/oder Messmaschine weist auch einen Spannadapter, insbesondere den **Spannadapter,** und auch ein Maschinenelement, insbesondere das **Maschinenelement,** auf.

Der **Spannadapter** weist ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement auf. Das **Maschinenelement** weist ein (Maschinenelement-)Gehäuseteil, eine zweite in dem (Maschinenelement-)Gehäuseteil aufgenommene Spannvorrichtung und ein zweites die zweite Spannvorrichtung betätigbares Betätigungselement auf.

Das erste Betätigungselement ist mit dem zweiten Betätigungselement - durch Betätigung des zweiten Betätigungselements - derart miteinander koppelbar, dass - bei Betätigung des zweiten Betätigungselements - sowohl das erste Betätigungselement als auch das zweite Betätigungselement betätigbar, insbesondere axial verschiebbar, sind und so das Bauteil mittels der ersten Spannvorrichtung an dem Spannadapter spannbar ist.

Das wieder weitere erfindungsgemäße **Spannsystem** zum Spannen eines Bauteils an einem Maschinenelement einer Bearbeitungs- und/oder Messmaschine weist auch einen Spannadapter, insbesondere den **Spannadapter,** und auch ein Maschinenelement, insbesondere das **Maschinenelement,** auf.

Der **Spannadapter** weist ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement auf. Das **Maschinenelement** weist ein (Maschinenelement-)Gehäuseteil, eine zweite in dem (Maschinenelement-)Gehäuseteil aufgenommene Spannvorrichtung und ein zweites die zweite Spannvorrichtung betätigbares Betätigungselement auf.

Das erste Betätigungselement sieht Spannfunktionsflächen vor, über welche das erste Betätigungselement mittels der zweiten Spannvorrichtung mit dem zweiten die zweite Spannvorrichtung betätigbaren Betätigungselement bei Betätigung des zweiten Betätigungselements koppelbar bzw. lösbar ist, wodurch so - bei Betätigung des zweiten Betätigungselements - sowohl das Bauteil in dem **Spannadapter** als auch der **Spannadapter** an dem **Maschinenelement** spannbar bzw. lösbar sind.

Das auch weitere erfindungsgemäße **Spannsystem** zum Spannen eines Bauteils an einem Maschinenelement einer Bearbeitungs- und/oder Messmaschine weist auch einen Spannadapter, insbesondere den **Spannadapter,** und auch ein Maschinenelement, insbesondere das **Maschinenelement,** auf.

Der **Spannadapter** weist ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement auf. Das **Maschinenelement** weist ein (Maschinenelement-)Gehäuseteil, eine zweite in dem (Maschinenelement-)Gehäuseteil aufgenommene Spannvorrichtung und ein zweites die zweite Spannvorrichtung betätigbares Betätigungselement auf.

Das erste Betätigungselement sieht Spannfunktionsflächen vor, über welche das erste Betätigungselement mittels der zweiten Spannvorrichtung mit dem zweiten die zweite Spannvorrichtung betätigbaren Betätigungselement bei Betätigung des zweiten Betätigungselements koppelbar bzw. lösbar ist, wodurch so - bei Betätigung des zweiten Betätigungselements - sowohl das erste Betätigungselement als auch das zweite Betätigungselement betätigbar, insbesondere axial verschiebbar, sind und so das Bauteil mittels der ersten Spannvorrichtung an dem **Spannadapter** spannbar ist.

Die **Bearbeitungs- und/oder Messmaschine** zum Bearbeiten und/oder Vermessen eines Bauteils weist einen Spannadapter bzw. ein Maschinenelement, insbesondere den **Spannadapter** bzw. das **Maschinenelement,** und/oder ein Spannsystem, insbesondere das **Spannsystem,** auf.

Das Bauteil ist so bei der Bearbeitung und/oder Vermessung mittels des **Spannadapters** bzw. des **Spannsystems** an dem **Maschinenelement** der **Bearbeitungsmaschine** spannbar.

Nach dem **Verfahren** zum Spannen oder Lösens eines Bauteils an einem Maschinenelement einer Bearbeitungs- und/oder Messmaschine mittels eines Spannmechanismus, insbesondere unter Verwendung eines Spannadapters, eines Maschinenelements, eines Spannsystems und/oder einer Bearbeitungs- und/oder Messmaschine, insbesondere des **Spannadapters,** des **Maschinenelements,** des **Spannsystems** und/oder der **Bearbeitungs- und/oder Messmaschine,** ist vorgesehen, dass beim Spannen oder Lösen des Bauteils an einem Spannadapter mittels Betätigung des Spannmechanismus auch der Spannadapter selbst durch die Betätigung des Spannmechanismus an einem Maschinenelement der Bearbeitungsmaschine spannbar bzw. lösbar ist.

Nach dem **Verfahren** zum Spannen oder Lösens eines Bauteils an einem Maschinenelement einer Bearbeitungs- und/oder Messmaschine mittels eines Spannmechanismus, insbesondere unter Verwendung eines Spannadapters, eines Maschinenelements, eines Spannsystems und/oder einer Bearbeitungs- und/oder Messmaschine, insbesondere des **Spannadapters,** des **Maschinenelements,** des **Spannsystems** und/oder der **Bearbeitungs- und/oder Messmaschine,** ist vorgesehen, dass ein bzw. das erste, eine bzw. die erste Spannvorrichtung zum Spannen oder Lösen des Bauteils an dem Spannadapter betätigbares Betätigungselement mit einem bzw. dem zweiten, eine bzw. die zweite Spannvorrichtung zum Spannen oder Lösen des Spannadapters an dem Maschinenelement betätigbares Betätigungselement - durch Betätigung des zweiten Betätigungselements - derart miteinander gekoppelt werden und dann - bei Betätigung des zweiten Betätigungselements - sowohl das erste Betätigungselement als auch das zweite Betätigungselement betätigbar, insbesondere axial verschiebbar, sind und dabei das Bauteil mittels des ersten Spannmechanismus an dem Spannadapter spannbar ist.

Den erfindungsgemäßen Gegenständen liegt die Überlegung zugrunde, dass sich die zwei Spannvorrichtungen, nämlich die eine Erste zum Spannen oder Lösen des Bauteils an dem Spannadapter und die andere Zweite zum Spannen oder Lösen des Spannadapters an dem Maschinenelement, derart - über die Spannfunktionsflächen an dem ersten Betätigungselement der ersten Spannvorrichtung (und so dem Spannmechanismus der zweiten Spannvorrichtung) - koppeln lassen, dass bei Betätigung der zweiten Spannvorrichtung bzw. des zweiten Betätigungselements auch beide Spannvorrichtungen - durch eine Betätigung/- bewegung sich spannen oder lösen lassen.

Damit werden bei bzw. durch diese "eine" Betätigung (des zweiten Betätigungselements bzw. der zweiten Spannvorrichtung) - sowohl der Spannadapter (am Maschinenelement) als auch das Bauteil (am Spannadapter) spannbar bzw. wieder lösbar.

Beides, d.h. Bauteil und Spannadapter, können so (bei dieser einen Betätigung) frei und entnehmbar bzw. fest und gespannt werden. Zusätzliche und separate Prozessschritte zum Befestigen des Spannadapters am Maschinenelement und/oder zum festen Koppeln von den Befestigungselementen, wie im Stand der Technik durch Verschrauben, entfallen.

Gegebenenfalls können darüber hinaus auch ungeachtet dessen auch Mittel vorgesehen werden, die die durch die Erfindung frei gewordenen/gelösten bzw. frei werdenden/lösbaren Bauteile, d.h. das zu spannende Bauteil und den Spannadapter, weiterhin, beispielsweise gegen ein ungewolltes Herausfallen oder Lösen, sichern.

So beispielsweise eine - später beschriebene - gegebenenfalls an einem Maschinenelementgehäuse/-teil befestigte Halte- und/oder Verriegelungsvorrichtung, unter Verwendung derer der **Spannadapter** in dem (Maschinenelement-)Gehäuseteil verriegelt gehalten werden kann und/oder eine Verschraubung, unter Verwendung derer der **Spannadapter** an dem (Maschinenelement-)Gehäuseteil verschraubt werden kann. Ungeachtet eines durch die Erfindung frei gewordenen bzw. gelösten Spannadapter, kann dieser so am Maschinenelement gehalten werden. Auch können so zu spannendes Bauteil und Spannadapter als Einheit gewechselt werden, ohne, dass Gefahr besteht, dass sich das Bauteil vom Spannadapter löst.

So beispielsweise auch eine - später beschriebene - erste Verspannung (bei dem Spannadapter), welche das erste Betätigungselement gegen das (Spannadapter-)Gehäuseteil verspannt.

Die erste Verspannung - wird sie entgegen dem Lösen bzw. der Lösebetätigung/Lösebetätigungsrichtung gerichtet (d.h., sie spannt die erste Spannvorrichtung (vor)) - kann so gewährleisten, dass - auch bei Lösebetätigung der Erfindung bzw. des zweiten Betätigungselements - die erste Spannvorrichtung weiterhin gespannt - und das zu spannende Bauteil weiterhin an dem Spannadapter gespannt/gehalten bleibt.

Wird allerdings die erste Verspannung entgegen dem Spannen bzw. der Spannbetätigung/Spannbetätigungsrichtung gerichtet (d.h., sie löst die erste Spannvorrichtung), so kann dadurch eine Spannbetätigungskraft (durch Betätigung des zweiten Betätigungselements) auf das zu spannende Bauteil "dosiert" (über die Stärke der ersten Verspannung) auf das zu spannende Bauteil weitergegeben werden.

Zurück zur Erfindung - einfach und anschaulich ausgedrückt bei der Erfindung, eine Betätigungsbewegung, nämlich das Betätigen des zweiten Betätigungselements reicht aus bzw. löst das Koppeln (bzw. vice versa das Entkoppeln) der beiden Betätigungselemente aus, wie auch das Spannen (bzw. vice versa das Lösen) sowohl des Spannadapters am Maschinenelement als auch des Bauteils am Spannadapter.

Dadurch erreicht die Erfindung wesentliche Vorteile, nämlich, dass die Bearbeitungs- oder Messmaschinen schnell umrüstbar sind, reicht der eine Betätigungsschritt aus. Deren Automatisierungsgrad kann so dadurch erhöht werden. Die Erfindung ermöglicht damit effiziente und effektive Bearbeitungsprozesse.

Darüber hinaus lassen sich derartige Spannvorrichtungen bzw. -systeme einfach und kostengünstig realisieren, wie auch, dass solche ein sicheres und positionsgenaues Spannen ermöglichen, so dass durch die Erfindung auch auf einfache und kostengünstige Weise eine positionsgenaue, sichere und reproduzierbare Aufnahme und Halterung eines zu spannenden Bauteils an einer Bearbeitungs- oder Messmaschine ermöglicht wird.

### Abhängige Gegenstände der Erfindung

Der **Spannadapter** kann weiter auch vorsehen, dass die erste Spannvorrichtung eine erste Spannzange aufweist, insbesondere mit einem ersten hülsenförmigen Sockel und/oder mehrere in Umfangsrichtung durch axiale Schlitze voneinander getrennte, an den ersten hülsenförmigen Sockel angebundene, radial federnde erste Spannzungen mit einem dem zu spannenden Bauteil zugeordneten vorderen ersten Spannbereich.

In dem ersten hülsenförmigen Sockel können auch zu den vorderen Schlitzen axial ausgerichtete hintere Schlitze angeordnet sein.

Auch kann der **Spannadapter** weiter vorsehen, dass die erste Spannvorrichtung eine erste Spannzange aufweist mit mehrere in Umfangsrichtung verteilt anordenbare separate erste Spannzungen mit einem dem zu spannenden Bauteil zugeordneten vorderen ersten Spannbereich. Insbesondere können beispielsweise so vier, fünf, sechs, sieben oder acht erste Spannzungen vorgesehen sein.

Diese können zweckmäßigerweise ringförmig und/oder zentrisch um das erste Betätigungselement angeordnet sein.

Weiter kann auch vorgesehen sein, dass der hülsenförmige Sockel oder die separaten Spannzungen in dem (Spannadapter-)Gehäuseteil gehalten ist bzw. sind. Dieses ist besonders dann zweckmäßig, wenn das zu spannende Bauteil eine HSK-Schnittstelle besitzt.

Andere Schnittstellen am Bauteil können es erforderlich machen, dass - anstelle der ersten Spannzange - ähnlich oder anders ausgebildete Spannelemente, wie beispielsweise eine Spannhülse, vorzusehen sind, welche dann auch anderenorts in bzw. an dem (Spannadapter-)Gehäuseelement angeordnet sind.

Insbesondere ist es aber zweckmäßig, wenn in dem vorderen ersten Spannbereich der ersten Spannzungen bzw. der ersten Spannzange erste das Bauteil spannbare Spannklauen ausgebildet sind.

Die ersten Spannklauen können zweckmäßigerweise radial außenliegende Formschlusselemente, beispielsweise spezielle gestaltete geometrischen Konturen, aufweisen, was insbesondere auch hier wieder von Bedeutung ist, wenn das zu spannende Bauteil eine HSK-Schnittstelle aufweist.

Andere Schnittstellen am Bauteil können es auch hier erforderlich machen, dass die Formschlusselemente anders bzw. anders angepasst ausgebildet und/oder anderenorts sind, beispielsweise radial innenliegend.

Ferner erweist es sich auch als zweckmäßig, wenn das erste Betätigungselement mehrteilig mit mehreren, insbesondere zumindest zwei, miteinander verbindbaren oder koppelbaren, insbesondere verschraubbaren, und gegebenenfalls als Zugstangen ausgebildeten, Betätigungsteilelementen ausgebildet ist.

Auch kann vorgesehen sein, dass das erste Betätigungselement bzw. die Betätigungsteilelemente bzw. Zugstangen des ersten Betätigungselements relativ gegenüber dem (Spannadapter-)Gehäuseteil und axial verschieblich in dem (Spannadapter-)Gehäuseteil aufgenommen ist bzw. sind.

Vereinfacht und anschaulich gesehen - die axiale Verschiebung - je nach Richtung - löst das Spannen oder das Lösen bei der ersten Spannvorrichtung aus.

Weiter kann auch das erste Betätigungsteilelement, insbesondere radial äußere und als erste Führungskulisse für die erste Spannvorrichtung bzw. die ersten Spannzungen der ersten Spannzange wirkende, Kontaktflächen zur Führung der ersten Spannvorrichtung bzw. der ersten Spannzungen der ersten Spannzange aufweisen.

Über eine geometrische Ausgestaltung der ersten Kontaktflächen bzw. der ersten Führungskulisse und/oder einen Anbringungsort der ersten Kontaktflächen bzw. der ersten Führungskulisse am ersten Betätigungsteilelement kann auf das Spannen (oder Lösen), sowohl zeitlich als auch vorgangs-/ablauf- wie auch spannkraftseitig, Einfluss genommen werden.

So ist es insbesondere vorteilhaft, wenn die erste Führungskulisse bzw. die ersten Kontaktflächen derart ausgebildet sind, dass sie - bei Kontakt mit den ersten Spannzungen der ersten Spannzange - diese zumindest bereichsweise, insbesondere im ersten Spannbereich, radial verschieben, wodurch insbesondere die ersten Spannklauen in einem Formschlusseingriff mit dem zu spannenden Bauteil bringbar sind.

Auch kann es vorgesehen sein, die erste Führungskulisse bzw. deren erste Kontaktflächen gegebenenfalls an dem (Spannadapter)Gehäuseteil vorzusehen. Wirken diese aber mit der ersten Spannzange bzw. deren ersten Spannzungen/ersten Spannklauen zusammen, so sind diese dann entsprechenden anders bzw. angepasst vorzusehen.

Weiterhin ist es vorteilhaft, wenn das zweite Betätigungsteilelement, insbesondere in einem Endbereich, die Spannfunktionsflächen, insbesondere ausgebildet in Form eines Knaufs bzw. an einer Außenfläche eines Knaufs, ausbildet. Ein sicheres Greifen bzw. Spannen wird hierdurch erleichtert bzw. gefördert.

Eine andere Gestaltung der Spannfunktionsflächen ist denkbar, wie beispielsweise Aussparungen und/oder Hinterschnitte, - solange sie den spannenden Formschluss mit dem zweiten Betätigungselement, insbesondere diesbezüglichen Spannzungen bzw. Spannklauen bzw. Formschlusselementen, nicht behindern.

Auch ist es zweckmäßig, wenn das erste Betätigungselement, insbesondere das zweite Betätigungsteilelement, ein Anschlagselement aufweist, welches bei Betätigung des ersten Betätigungselements in Kontakt mit dem (Spannadapter-)Gehäuseteil bringbar ist - und dieses dabei gegebenenfalls axial verschieben kann. Ein solches Anschlagelement kann insbesondere und beispielsweise als flächiges Element ausgebildet sein, um so - bei Kontakt - möglichst einen Flächenkontakt - mit insbesondere gleichmäßiger Flächenbelastung - zu gewährleisten.

Insbesondere kann es auch zweckmäßig sein, ein solches Anschlagselement auch im Rahmen der bereits erwähnten und dann näher beschriebenen ersten Verspannung - beispielsweise als Abstützung für ein Federelement - zu verwenden.

Auch kann ein erstes Zentrierelement, insbesondere ein, insbesondere in einer Aufnahmeöffnung des (Spannadapter-)Gehäuseteils aufgenommenes, hülsenförmiges Zentrierelement für eine zentrierte Aufnahme des zu spannenden Bauteils, insbesondere eines Gesamtwerkzeugs mit einer kegelförmigen Schnittstelle, beispielsweise eine Lagerbuchse, an dem **Spannadapter** vorgesehen sein.

Ferner kann es auch zweckmäßig sein, eine bzw. die (bereits erwähnte) erste Verspannung, insbesondere aufweisend ein Verspannungselement, beispielsweise ein Federelement, vorzusehen, welche das erste Betätigungselement gegen das (Spannadapter-)Gehäuseteil verspannt.

Ein solches Verspannungselement bzw. ein solches Federelement, kann dabei - funktional und wirkend - zwischen dem ersten Betätigungselement und dem (Spannadapter-)Gehäuseteil angeordnet sein.

Ferner ist es besonders vorteilhaft, wenn eine erste Verspannkraft der ersten Verspannung in Abhängigkeit des zu spannenden Bauteils ausgewählt ist.

Auch kann das **Maschinenelement** vorsehen, dass die zweite Spannvorrichtung eine zweite Spannzange aufweist, insbesondere mit einem zweiten hülsenförmigen Sockel und/oder mehrere in Umfangsrichtung durch axiale Schlitze voneinander getrennte, an den zweiten hülsenförmigen Sockel angebundene, radial federnde zweite Spannzungen mit einem dem zu spannenden ersten Betätigungselement zugeordneten vorderen zweiten Spannbereich.

In dem ersten hülsenförmigen Sockel können auch zu den vorderen Schlitzen axial ausgerichtete hintere Schlitze angeordnet sein.

Auch kann das **Maschinenelement** aber vorsehen, dass die zweite Spannvorrichtung eine zweite Spannzange aufweist mit mehreren in Umfangsrichtung verteilt anordenbaren separaten zweiten Spannzungen mit einem dem zu spannenden Spannfunktionselementen zugeordneten zweiten Spannbereich.

Insbesondere können beispielsweise so vier, fünf, sechs, sieben oder acht zweite Spannzungen vorgesehen sein.

Diese können zweckmäßigerweise auch ringförmig und/oder zentrisch um das zweite Betätigungselement angeordnet sein.

Ferner erscheint es zweckmäßig, wenn in dem vorderen zweiten Spannbereich - auch - zweite das erste Betätigungselement spannbare Spannklauen, insbesondere mit Formschlusselementen für einen Formschluss mit den Spannfunktionsflächen des ersten Betätigungselements, beispielsweise spezielle gestaltete geometrischen Konturen, ausgebildet sind.

Dabei kann es auch zweckmäßig sein, wenn die zweiten Spannzungen, insbesondere unter Verwendung eines Spannelements, insbesondere einer Ringfeder, gegen das zweite Betätigungselement verspannt gehalten werden.

Auch bei dem zweiten Betätigungselement kann es vorteilhaft, sein, wenn dieses mehrteilig mit mehreren, insbesondere zumindest zwei, miteinander verbindbaren bzw. koppelbaren, insbesondere verschraubbaren, Betätigungsteilelementen ausgebildet ist.

Ferner kann vorgesehen sein, dass das (Maschinenelement-)Gehäuseteil, insbesondere radial innere und als zweite Führungskulisse für die zweite Spannvorrichtung bzw. die zweiten Spannzungen der zweiten Spannzange wirkende, zweite Kontaktflächen zur Führung der zweiten Spannvorrichtung bzw. der zweiten Spannzungen der zweiten Spannzange aufweist.

Auch hier - über eine geometrische Ausgestaltung der zweiten Kontaktflächen bzw. der zweiten Führungskulisse und/oder einen Anbringungsort der zweiten Kontaktflächen bzw. der zweiten Führungskulisse am erste Betätigungsteilelement - kann auf das Spannen (oder Lösen), sowohl zeitlich als auch vorgangs-/ablauf- wie auch spannkraftseitig, Einfluss genommen werden.

So ist es auch hier insbesondere vorteilhaft, wenn die zweite Führungskulisse bzw. die zweiten Kontaktflächen derart ausgebildet sind, dass sie - bei Kontakt mit den zweiten Spannzungen der zweiten Spannzange - diese zumindest bereichsweise, insbesondere im zweiten Spannbereich, radial verschieben, wodurch insbesondere die zweiten Spannklauen in einem Formschlusseingriff mit den Spannfunktionsflächen des ersten Betätigungselements bringbar sind.

Auch kann es vorgesehen sein, die die Führungskulisse bzw. deren zweite Kontaktflächen gegebenenfalls an dem zweiten Betätigungselement vorzusehen. Wirken diese aber mit der zweiten Spannzange bzw. deren zweiten Spannzungen/zweiten Spannklauen zusammen, so sind diese dann entsprechenden anders bzw. angepasst vorzusehen.

Auch ist es vorteilhaft, wenn das zweite Betätigungselement relativ gegenüber dem (Maschinenelement-)Gehäuseteil und axial verschieblich in dem (Maschinenelement-)Gehäuseteil aufgenommen ist.

Vereinfacht und anschaulich gesehen - die axiale Verschiebung - je nach Richtung - löst das Spannen oder das Lösen bei der zweiten Spannvorrichtung aus.

Weiterbildend kann das **Maschinenelement** ein Maschinenelementgehäuse vorsehen, in welchem das (Maschinenelement-)Gehäuseteil, insbesondere unter Verwendung von Wälzlager, insbesondere drehbar, aufgenommen bzw. gelagert ist (vgl. Drehspindel).

Auch eine bzw. die bereits erwähnte Halte- und/oder Verriegelungsvorrichtung kann vorgesehen sein, unter Verwendung derer der **Spannadapter** in dem (Maschinenelement-)Gehäuseteil verriegelt gehalten werden kann und/oder eine Verschraubung, unter Verwendung derer der **Spannadapter** an dem (Maschinenelement-)Gehäuseteil verschraubt werden kann.

Diese Halte- und/oder Verriegelungsvorrichtung ist zweckdienlich an dem Maschinenelementgehäuse oder an dem (Maschinenelement-)Gehäuseteil befestigt.

Auch kann vorgesehen sein, dass die Halte- und/oder Verriegelungsvorrichtung mechanisch betätigbar ist, wobei insbesondere bei Betätigung der Spannadapter mittels Formschluss in dem (Maschinenelement-)Gehäuseteil verriegelt gehalten werden kann.

Ferner kann bei dem **Maschinenelement** ebenfalls ein Zentrierelement, d.h. das zweite Zentrierelement, vorgesehen sein. Zweckdienlich erscheint es, wenn das zweite Zentrierelement einen, insbesondere in einer Aufnahmeöffnung des (Maschinenelements-)Gehäuseteils aufgenommenen, Kugelkäfig, für eine zentrierte Aufnahme des **Spannadapters** an dem **Maschinenelement** vorsieht.

Weiterbildend kann das **Maschinenelement** eine zweite, insbesondere gleich oder in Gegenwirkung der ersten Verspannung wirkende, Verspannung, insbesondere aufweisend ein Verspannungselement, insbesondere ein Federelement, beispielsweise eine Druckfeder, aufweisen, welche das zweite Betätigungselement, insbesondere dessen zweites Betätigungsteilelement gegen das (Maschinenelement-)Gehäuseteil verspannt.

Diese zweite Verspannung kann zweckmäßigerweise ein Verspannungselement, insbesondere ein Federelement, aufweisen, welches funktional und wirkend zwischen dem zweiten Betätigungselement, insbesondere dessen zweiten Betätigungsteilelements, und dem (Maschinenelement-)Gehäuseteil angeordnet ist.

Darüber hinaus ist es hier weiter zweckmäßig, wenn die erste Verspannkraft der ersten Verspannung und eine zweite Verspannkraft der zweiten Verspannung, insbesondere unter Berücksichtigung des zu verspannenden Bauteils, aufeinander abgestimmt sind.

Dabei können die erste Verspannkraft der ersten Verspannung und die zweite Verspannkraft der zweiten Verspannung derart wirkend ausgebildet sein, dass sie in gleicher Richtung wirken - oder alternativ - können die erste Verspannkraft der ersten Verspannung und die zweite Verspannkraft der zweiten Verspannung derart wirkend ausgebildet sein, dass sie einander entgegenwirken.

Ferner kann auch eine, insbesondere pneumatisch oder hydraulisch oder mechanisch betreibbare, in dem (Maschinenelement-)Gehäuseteil aufgenommene Vorrichtung vorgesehen sein, mittels welcher das zweite Betätigungselement zum Spannen und/oder Lösen verschiebbar ist.

Hier kann weiter auch vorgesehen sein, dass die Vorrichtung das zweite Betätigungselement gesteuert verschiebt.

Besonders vorteilhaft erscheint es auch, wenn die zweite Verspannung und die Vorrichtung derart eingerichtet und aufeinander abgestimmt sind, dass eine, insbesondere pneumatisch oder hydraulisch oder mechanisch aufgebrachte, Verschiebekraft der Vorrichtung gegen die zweite Verspannkraft wirkt.

Weiterbildend zweckmäßig ist es, wenn bei der Betätigung des Spannmechanismus bzw. bei der Betätigung des zweiten Betätigungselements das Spannen bzw. das Lösen des Spannadapters und des Bauteils sequenziell erfolgt.

Alternativ kann hier auch vorgesehen sein, dass bei der Betätigung des Spannmechanismus bzw. bei der Betätigung des zweiten Betätigungselements das Spannen bzw. das Lösen des Spannadapters und des Bauteils gleichzeitig erfolgen.

Derartig gestalte zeitliche Vorgänge können insbesondere durch eine entsprechende Anordnung (z.B. axialer Abstand) von erster und zweiter Kulisse bzw. einer axialen Länge der Betätigungselemente/Betätigungsteileelemente realisiert bzw. umgesetzt werden.

Vorteilhafterweise sieht eine Weiterbildung vor, dass bei der Betätigung des Spannmechanismus bzw. bei der Betätigung des zweiten Betätigungselements das Lösen des an dem Spannadapter gespannten Bauteils, insbesondere unter Verwendung einer bzw. der ersten Verspannung (s. oben), oder das Lösen des an dem Maschinenelement gespannten Spannadapter, insbesondere unter Verwendung einer bzw. der Halte- und/oder Verriegelungsvorrichtung (s. oben), verhindert wird.

Auch kann vorgesehen sein, dass bei der Betätigung des Spannmechanismus bzw. bei der Betätigung des zweiten Betätigungselements das Bauteil relativ zum (Spannadapter-)Gehäuseteil und/oder der Spannadapter relativ zum (Maschinenelement-)Gehäuseteil axial verschoben wird/werden.

Ein automatisierter "Auswurf" des entsprechenden Teils kann so realisiert bzw. erleichtert werden.

### Verfahrensphasen

Bei einer vorteilhaften Weiterbildung ist vorgesehen, dass beim Spannen durch Betätigung des zweiten Betätigungselements, insbesondere durch dessen relatives axiales Verschieben gegen das (Maschinenelement-)Gehäuseteil in einer Einzugs-/Spannrichtung, in einer ersten Spannphase die zweite Spannvorrichtung das erste Betätigungselement spannt bzw. greift.

Weiter kann dann bei dem Spannen durch Betätigung des zweiten Betätigungselements, insbesondere durch dessen relatives axiales Verschieben gegen das (Maschinenelement-)Gehäuseteil in der Einzugs-/Spannrichtung, in einer zweiten, der ersten nachfolgenden Spannphase das erste, durch die zweite Spannvorrichtung gespannte Betätigungselement ebenfalls in Einzugs-/Spannrichtung des zweiten Betätigungselements axial verschoben werden (, ist in der ersten Spannphase das erste Betätigungselement von der zweiten Spannvorrichtung gespannt worden).

Zweckmäßig ist es, wenn in dieser zweiten Spannphase das zu spannende Bauteil mittels der durch das erste Betätigungselement betätigten ersten Spannvorrichtung an dem Spannadapter gespannt wird - und dann durch weitere Betätigung des zweiten Betätigungselements, insbesondere durch dessen relatives axiales Verschieben gegen das (Maschinenelement-)Gehäuseteil in der Einzugs-/Spannrichtung, der Spannadapter an dem Maschinenelement gespannt wird.

Ist - im Falle einer bereits erwähnten Vorspannung des zu spannenden Bauteils am Spannadapter, insbesondere mittels der vorerwähnten ersten Verspannung der ersten Spannvorrichtung, - das zu verspannende Bauteil bereits am Spannadapter verspannt, so kann es insbesondere hier zweckmäßig sein, wenn in dieser zweiten Spannphase, in welcher das zu spannende Bauteil bereits durch erste Spannvorrichtung an dem Spannadapter vorverspannt ist, der Spannadapter an dem Maschinenelement gespannt wird.

Ein Spannen des zu spannenden Bauteils am Spannadapter mittels der ersten Spannvorrichtung ist hier dann nicht mehr nötig (, da bereits erfolgt); etwaige Spannkräfte auf das Bauteil durch Betätigen des zweiten Betätigungselements verstärken sogar die erste Verspannung.

Bei einer anderen weiteren vorteilhaften Weiterbildung ist vorgesehen, dass beim Lösen durch Betätigung des zweiten Betätigungselements (hier ist zunächst das erste und das zweite Betätigungselement mittels der gespannten zweiten Spannvorrichtung gekoppelt), insbesondere durch dessen relatives axiales Verschieben gegen das (Maschinenelement-)Gehäuseteil in einer Löserichtung, das erste Betätigungselement und das zweite Betätigungselement in Löserichtung axial verschoben werden, wodurch zunächst nur das an dem Spannadapter gespannte Bauteil (durch Lösen der ersten Spannvorrichtung) gelöst bzw. freigegeben wird (, wohingegen die zweite Spannvorrichtung noch gespannt gehalten wird) und anschließend erst der an dem Maschinenelement gespannte Spannadapter - durch Lösen der zweiten Spannvorrichtung - gelöst bzw. freigegeben wird.

Auch kann es aber zweckmäßig sein, wenn beim Lösen durch Betätigung des zweiten Betätigungselements (hier ist zunächst das erste und das zweite Betätigungselement mittels der gespannten zweiten Spannvorrichtung gekoppelt), insbesondere durch dessen relatives axiales Verschieben gegen das (Maschinenelement-)Gehäuseteil in einer Löserichtung, das zweite Betätigungselement in Löserichtung axial verschoben wird, wodurch der an dem Maschinenelement gespannte Spannadapter gelöst bzw. freigegeben wird. Einem etwaigen Lösen bzw. Freigeben bei der ersten Spannvorrichtung kann mittels der erwähnten ersten Verspannung entgegengewirkt bzw. dieses verhindert werden.

Eine Vielfältigkeit bei der Abstimmung der Kulissen/Kontaktflächen und Betätigungselemente - jeweils unter- bzw. innerhalb und/oder zwischen diesen, wie auch die Möglichkeit der Ausgestaltung der ersten Verspannung im Spannadapter (vgl. auch Wirkrichtung der ersten Verspannung im Spannadapter), ermöglicht so eine Vielzahl von verschiedenen Spann- und Löseabläufen mit entsprechenden Spann- oder Lösephasen.

Die **Bearbeitungs- bzw. Messmaschine** kann beispielsweise eine Werkzeugmaschine, wie beispielsweise eine Fräs-, Schleif- oder Drehmaschine, eine Wuchtvorrichtung, eine Messvorrichtung, ein Voreinstellgerät oder eine Vorrichtung zu einer Fertigung und/oder Formgebung und/oder Vermessung des zu spannenden Bauteils sein.

Diese sieht dann den **Spannadapter** zum Spannen eines Bauteils bzw. das **Maschinenelement** zum Spannen eines ein Bauteil spannbaren Spannadapters bzw. die **Spannsysteme** zum Spannen eines Bauteils an einem Maschinenelement einer Bearbeitungs- und/oder Messmaschine vor - sowie führt das bzw. die **Verfahren** zum Spannen eines Bauteils an einem Maschinenelement einer Bearbeitungs- und/oder Messmaschine aus.

Dabei erscheint es auch von besonderem Vorteil, wenn der **Spannadapter** ein Auswucht- oder Messadapter ist bzw. das zu spannende Bauteil ein Werkzeug (im Sinne eines Gesamtwerkzeugs aus Werkzeughalter, insbesondere mit einem Steilkegel, und einem eigentlichen Werkzeug) oder ein, insbesondere durch die **Bearbeitungs- bzw. Messmaschine** zu bearbeitendes, Werkstück ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf und sind - der Übersichtlichkeit halber - gegebenenfalls nicht in allen Figuren eingetragen).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Ansicht eines in einer Wuchtmaschinenspindel aufgenommenen, einen Werkzeughalter (mit HSK-Schnittstelle) haltenden Wuchtadapters gemäß einer ersten erfindungsgemäßen Ausführung in einer ersten (End-)Stellung,
- FIG 2: eine Ansicht des Wuchtadapters gemäß der ersten erfindungsgemäßen Ausführung in einer zweiten (Zwischen-)Stellung,
- FIG 3: eine Ansicht des Wuchtadapters gemäß der ersten erfindungsgemäßen Ausführung in einer dritten (End-)Stellung,
- FIG 4: eine Ansicht eines in einer Wuchtmaschinenspindel aufgenommenen, einen Werkzeughalter (mit HSK-Schnittstelle) haltenden Wuchtadapters gemäß einer zweiten erfindungsgemäßen Ausführung in einer ersten (End-)Stellung,
- FIG 5: eine Ansicht des Wuchtadapters gemäß der zweiten erfindungsgemäßen Ausführung in einer zweiten (End-)Stellung.

### Universeller Spann- bzw. Wuchtadapter (Fig.en 1 bis 3 (erste Ausführung) und Fig.en 4 bis 5 (zweite Ausführung))

FIGen 1 bis 3 und FIGen 4 bis 5 zeigen jeweils einen ersten bzw. zweiten Wuchtadapter 1 - aufgenommen in einer Wuchtmaschinenspindel 8 einer Wuchtvorrichtung 60 - mit einem in dem Wuchtadapter 1 gehaltenen Werkzeughalter 2 (mit HSK-Schnittstelle 22).

Die gezeigten Wuchtadapter 1 sind zum Spannen eines rotierenden Bauteils 2, d.h. des gezeigten Werkzeughalters 2 hier mit HSK-Schnittstelle 22, an der Wuchtmaschinenspindel 8 der Wuchtmaschine 60 konzipiert.

Bei derartigen Maschinen ist eine zentrische Aufnahme des auszuwuchtenden oder zu messenden Bauteils 2 mit hoher Rundlauf- und Wiederholgenauigkeit sowie Positionsgenauigkeit und Positionssicherheit von besonderer Bedeutung, wie auch müssen Rüstzeiten möglichst kurzgehalten werden können.

Bei dem Bauteil 2 handelt es sich in diesem Fall um den Werkzeughalter 2 (mit HSK-Schnittstelle 22), kann aber auch eine andere Werkzeugaufnahme für ein Bohr-, Fräs- oder Schleifwerkzeug, ein Rotor oder ein anderes auszuwuchtendes oder zu vermessendes Maschinenteil sein.

Wuchtadapter 1 zusammen mit ihn aufnehmendes Maschinenelement 8, d.h. Maschinenspindel 8, sollen gemeinsam als Spannsystem bezeichnet, gewährleisten beide zusammen, dass das zu spannende Bauteil 2, hier der Werkzeughalter 2, an der Wuchtmaschine 60 gespannt werden kann.

### - Spannsystem (1, 8) mit Wuchtadapter 1 und Wuchtmaschinenspindel 8 (erste Ausführung, FIGen 1 bis 3)

Der Wuchtadapter 1 enthält, wie hier die FIGen 1 bis 3 zeigen, ein in die Wuchtmaschinen-/Antriebsspindel 8 der Wuchtvorrichtung 60 einsetzbares Wuchtadaptergehäuseteil 5.

### Bauteilspannung (durch die erste Spannvorrichtung 3)

Dieses Wuchtadaptergehäuseteil 5 ist im wesentlichen hohlzylindrisch - mit einer Aufnahmeöffnung 45 an seinem oberen Ende und einem bis an sein unteres Ende reichenden zylindrischen Durchgang 46.

Die Aufnahmeöffnung 45 sieht einen zylindrischen Aufnahmebereich für einen konischen Schaft 22 (hier HSK-Schnittstelle 22) des zu spannenden Werkzeughalters 2 bzw. - im Folgenden allgemein - Bauteils 2 vor.

Der Schaft 22 des zu spannenden Bauteils 2 ist konisch ausgebildet - und kann einen polygonalen, kreisrunden oder sonstigen geeigneten Querschnitt aufweisen. Axial oberhalb des Schaftes 22 weist das zu spannende Bauteil 2 einen Auflageflansch 50 auf, welcher - wird das zu spannende Bauteil zum Spannen in die Aufnahmeöffnung 6 eingeführt - auf der oberen Stirnseite des Wuchtadaptergehäuseteils 5 aufliegt (und so das zu spannende Bauteil 2 seine maximale Eintauchtiefe in die Aufnahmeöffnung 45 des Wuchtadapters 1 erreicht/einnimmt) .

Im Bereich des Endes des konischen Schaftes 22 des Bauteils 2 ist eine im Wesentlichen zylindrische innere axiale Ausnehmung 52 mit einem inneren Spannabschnitt 53 vorgesehen, über welche das Bauteil 2 - mittels des Wuchtadapters 1 (im Formschluss durch die erste Spannvorrichtung 3 des Wuchtadapters 1) - gespannt bzw. gehalten werden kann.

In der zylindrischen Aufnahmeöffnung 45 des Wuchtadaptergehäuseteils 5 ist eine Lagerbuchse 21 eingesetzt, welche in ihrem oberen Bereich radial federnde Zungen vorsieht.

Die Innenkontur der Lagerbuchse 21 ist derart an den Querschnitt des Schaftes 22 des zu spannenden Bauteils 2 angepasst, dass - beim Einsetzen des zu spannenden Bauteils 2 in den Wuchtadapter 1 bis zu dessen maximaler Eintauchtiefe - die Zungen leicht radial nach außen gedrückt werden - und so ein zentrierendes Einsetzen des Bauteils 2 erleichtert bzw. gewährleistet wird.

In dem Wuchtadaptergehäuseteil 5 ist außerdem eine bzw. die erste Spannvorrichtung 3 aus einer ersten Spannzange 10 und einem zu dieser koaxialen, zweiteiligen ersten Betätigungselement 4 zur Betätigung der Spannzange 10 (durch axiales Verschieben - in Lös- 63 oder Spannrichtung 64 - des ersten Betätigungselements 4) untergebracht.

Das erste Betätigungselement 4 weist eine obere erste Zugstange 15 sowie eine untere zu dieser koaxiale, mit der ersten Zugstange 15 verschraubbare/-te, in dem Wuchtadaptergehäuseteil 5 geführte zweite Zugstange 16 auf, über welche so das erste Betätigungselement 4 (als Ganzes) in dem Wuchtadaptergehäuseteil 5 geführt, axial verschoben - und so die erste Spannvorrichtung 3 betätigt (d.h., gespannt und gelöst) werden kann.

Die erste Spannzange 10 sieht mehrere in Umfangsrichtung ringförmig und zentrisch um das erste Betätigungselement 4 bzw. erste Zugstange 15 angeordnete, separate erste Spannzungen 11 vor. Jede Spannzunge 11 sitzt mit ihrem jeweiligen unteren Ende in einer ringförmigen Ausnehmung 54 im zylindrischen Durchgang 46 und weist in ihrem oberen Bereich einem dem zu spannenden Bauteil 2 zugeordneten vorderen/oberen ersten Spannbereich 12 auf.

In dem vorderen/oberen ersten Spannbereich 12 der ersten Spannzungen 11 sind erste das Bauteil 2 spannbare Spannklauen 13 - in Form von radial außenliegenden Formschlusselementen 14 - ausgebildet, welche - beim Spannen des Bauteils 2 - in den inneren Spannabschnitt 53 im konischen Schaftende (22) des Bauteils 2 eingreifen (können).

Die das Spannen und das Lösen der ersten Spannklauen 13 bzw. ersten Spannzungen 11 auslösende/steuernde Bewegung erfolgt durch radial äußere und als erste Führungskulisse 18 für die ersten Spannzungen 11 wirkende Kontaktflächen 19 an der oberen ersten Zugstange 15. D.h., durch axiales Verschieben des ersten Betätigungselements 4 bzw. oberen ersten Zugstange 15 führen die ersten Kontaktflächen 19 die ersten Spannzungen 11 - und erzeugen so die Spann- und Lösebewegung der ersten Spannzungen 11.

Wie die Fig.en 1 bis 3 zeigen, ist die erste Führungskulisse 18 bzw. sind die ersten Kontaktflächen 19 derart ausgebildet, dass sie - bei Kontakt mit den ersten Spannzungen 11 der ersten Spannzange 10 - diese zumindest bereichsweise, hier im ersten vorderen/oberen Spannbereich 12, radial verschieben, wodurch die ersten Spannklauen 13 in den Formschlusseingriff mit dem zu spannenden Bauteil 2 bringbar sind.

Die zweite untere Zugstange 16 sieht an ihrem unteren Ende einen Knauf 6 vor, welcher - an seiner Außenseite - Spannfunktionsflächen 6 für eine zweite Spannvorrichtung 7 bzw. diesbezüglicher zweiter Spannzungen 28 zur Verfügung stellt.

In etwa in der Mitte der zweiten unteren Zugstange 16 ist ferner ein als Flansch 20 ausgebildetes Abstützelement 20 ausgebildet, welches in einer - bis ans untere Ende des Wuchtadaptergehäuseteils 5 sich ersteckende Durchmesser erweiterte - Ausnehmung 55 im unteren Bereich des zylindrischen Durchgangs 46 des Wuchtadaptergehäuseteils 5 geführt wird.

Am unteren Ende des Wuchtadaptergehäuseteils 5 ist eine Lochscheibe 56 befestigt - mit einer zentralen Ausnehmung, durch welche die zweite untere Zugstange 16 unterhalb des Wuchtadaptergehäuseteils 5 aus diesem herausragt.

Oberes Ende der Durchmessererweiterung 55 im zylindrischen Durchgang 46 des Wuchtadaptergehäuseteils 5 und Lochscheibe 56 begrenzen so den maximal möglichen axialen Verschiebeweg des Abstützelements 20 - und somit gleichzeitig auch den maximalen möglichen axialen Verschiebeweg der zweiten unteren Zugstange 16 bzw. des ersten Betätigungselements 4.

Zwischen dem Abstützelement 20 und der Lochscheibe 56 ist in der Durchmessererweiterung 55 im zylindrischen Durchgang 46 ein Federelement 24 eingebracht, welches sich - nach oben hin - gegen das Abstützelement 20 und - nach unten hin - gegen die Lochscheibe 56 abstützt (erste Verspannung 23 - s. oben).

Durch die Federkraft des Federelements 24 wird so - über das Abstützelement 20 und die untere zweite Zugstange 16 - das erste Betätigungselement 4 in die Lösestellung der ersten Spannvorrichtung 3 gedrückt (, in welcher sich die ersten Spannklauen 13 der ersten Spanzange 10 nicht im Eingriff mit dem zu spannenden Bauteil 2 befinden bzw. dieses so freigegeben ist.

### Wuchtadapterspannung (durch die zweite Spannvorrichtung 7)

Die Wuchtmaschinen-/Antriebsspindel 8 sieht ein (inneres) den Wuchtadapter 2 aufnehmendes Wuchtmaschinenelementgehäuseteil 49 vor, welches über Wälzlager 37, hier Kugellager, drehbar in einem (äußeren) Antriebsspindelgehäuse 36 gelagert ist.

Der Spindelantrieb erfolgt über einen - hier nur angedeuteten - Hohlwellenmotor 44.

Auch dieses Wuchtmaschinenelementgehäuseteil 49 ist im wesentlichen hohlzylindrisch - mit einer zylindrischen Aufnahmeöffnung 47 für den Wuchtadapter 1 bzw. das Wuchtadaptergehäuseteil 5 an seinem oberen Ende und einem bis an sein unteres Ende reichenden zylindrischen Durchgang 48.

Am Außenumfang ist das Wuchtadaptergehäuseteil 5 ebenfalls im Wesentlichen zylindrisch ausgebildet und sieht - ähnlich dem zu spannenden Bauteil 2 - einen Auflageflansch 51 vor. Der Wuchtadapter 1 kann so - bis zur Auflage seines Auflageflansches 51 auf die Stirnfläche des Wuchtmaschinenelementgehäuseteils 49 - in die Aufnahmeöffnung 47 des Wuchtmaschinenelementgehäuseteils 49 eingeführt werden.

In der Aufnahmeöffnung 47 des Wuchtmaschinenelementgehäuseteils 49 sitzt eine Kugelbuchse 39, welche den Wuchtadapter 1 zentriert hält. Wälzkörper der Kugelbuchse 39 können unter radialer Vorspannung stehen, so dass eine spielfreie Zentrierung entsteht.

In dem Wuchtmaschinenelementgehäuseteil 49 ist außerdem eine zweite Spannvorrichtung 7 aus einer zweiten Spannzange 27 und einem zu dieser koaxialen, zweiten Betätigungselement 9 zur Betätigung der zweiten Spannzange 27 (durch axiales Verschieben des zweiten Betätigungselements 9) untergebracht.

Das zweite Betätigungselement 7 ist als kompakter, in dem Wuchtmaschinenelementgehäuseteil 49 geführter Zugkörper 33 ausgebildet. Eine Zentrierung von diesem in dem Wuchtmaschinenelementgehäuseteil 49 erfolgt ebenfalls über eine Kugelbuchse 39, deren Wälzkörper - unter radialer Vorspannung - eine spielfreie Führung gewährleisten können.

Auch die zweite Spannzange 27 sieht mehrere in Umfangsrichtung ringförmig und zentrisch um das zweite Betätigungselement 9 angeordnete, separate zweite Spannzungen 28 vor. Die zweiten Spannzungen werden mittels einer Ringfeder 25 - an ihren unteren Enden - gegen den Zugkörper 33 gedrückt.

Jede Spannzunge 28 sitzt mit ihrem jeweiligen unteren Ende in einer ringförmigen Ausnehmung 26 am Zugkörper 33/zweiten Betätigungselement 9 und weist in ihrem oberen Bereich einen dem zu spannenden Bauteil 2, d.h. dem Wuchtadapter 2 bzw. dessen inneren zylindrischen Durchgang 46, zugeordneten vorderen/oberen zweiten Spannbereich 29 auf.

In dem vorderen/oberen zweiten Spannbereich 29 der zweiten Spannzungen 28 sind zweite den Wuchtadapter 1 spannbare Spannklauen 30 - in Form von radial innenliegenden Formschlusselementen 31 - ausgebildet, welche - beim Spannen - den Knauf 6 am unteren Ende der zweiten unteren Zugstange 16 greifen (können).

Die das Spannen und das Lösen der zweiten Spannklauen 30 bzw. zweiten Spannzungen 28 auslösende/steuernde Bewegung erfolgt durch radial innere und als zweite Führungskulisse 34 für die zweiten Spannzungen 28 wirkenden zweiten Kontaktflächen 35 im inneren zylindrischen Durchgang 48 des Wuchtmaschinenelementgehäuseteils 49. D.h., durch axiales Verschieben des zweiten Betätigungselements 9 bzw. des Zugkörpers 33 führen die zweiten Kontaktflächen 35 die zweiten Spannzungen 28 - und erzeugen so die Spann- und Lösebewegung der zweiten Spannzungen 28.

Wie die Fig.en 1 bis 3 auch zeigen, ist die zweite Führungskulisse 34 bzw. sind die zweiten Kontaktflächen 35 derart ausgebildet, dass sie - bei Kontakt mit den zweiten Spannzungen 28 der zweiten Spannzange 27 - diese zumindest bereichsweise, hier im zweiten vorderen/oberen Spannbereich 29, radial verschieben, wodurch die zweiten Spannklauen 30 in den Formschlusseingriff mit dem Knauf 6 der zweiten Zugstange 16 des ersten Betätigungselements 4 bringbar sind.

An dem unteren Ende des Zugkörpers 33 des zweiten Betätigungselements 9 ist ein Kolben 43 einer pneumatischen Verschiebevorrichtung 42 befestigt.

Zwischen dem Kolben 43 und dem Wuchtmaschinenelementgehäuseteil 49 sind Druckfedern 40 eingespannt. Die Druckfedern 40 sind zur stabilen Halterung in erkennbare Sacklöcher 57 im Wuchtmaschinenelementgehäuseteil 49 und im Kolben 43 eingesetzt.

Durch diese Druckfedern 41 wird das zweite Betätigungselement 9 - und so die zweite Spannzange 27 (über das zweite Betätigungselement 9) in ihre Spannstellung (dort den Knauf 6 des ersten Betätigungselements 4 bzw. am unteren Ende der zweiten Zugstange 16 greifend) gedrückt (zweite Verspannung 40).

Durch Verschiebung des Kolbens 43 entgegen der Kraft der Druckfedern 41 kann die zweite Spannzange 27 (über das zweite Betätigungselement 9) "gelöst" werden (Lösestellung).

Hierzu kann der Kolben 43 über eine radiale Dichtung (nicht näher beziffert) abgedichtet in dem Wuchtmaschinenelementgehäuseteil 49 axial verschiebbar angeordnet sein und von der Unterseite mit Druckluft (oder ein anderes Druckfluid) beaufschlagt werden.

Wie weiter auch die Fig.en 1 bis 3 zeigen, ist ferner auch eine - mechanische - an dem Antriebsspindelgehäuse 36 befestigte Halte- und/oder Verriegelungsvorrichtung 38 vorgesehen, unter Verwendung derer der Wuchtadapter 1 in dem Wuchtmaschinenelementgehäuseteil 49 verriegelt gehalten - und so dieser - auch bei gelöster zweiter Spannvorrichtung 7 - im Wuchtmaschinenelementgehäuseteil 49 gehalten werden kann.

### Funktionsweise

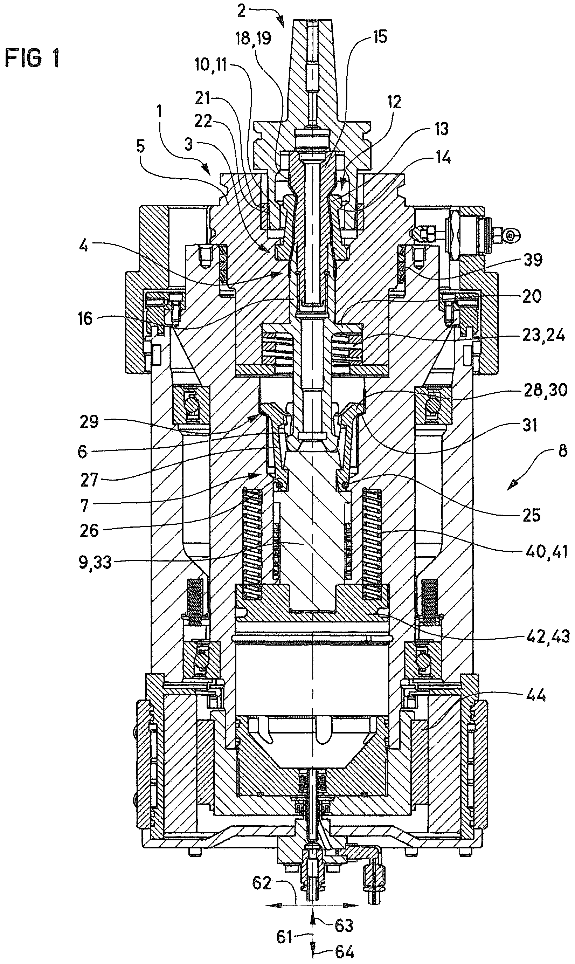

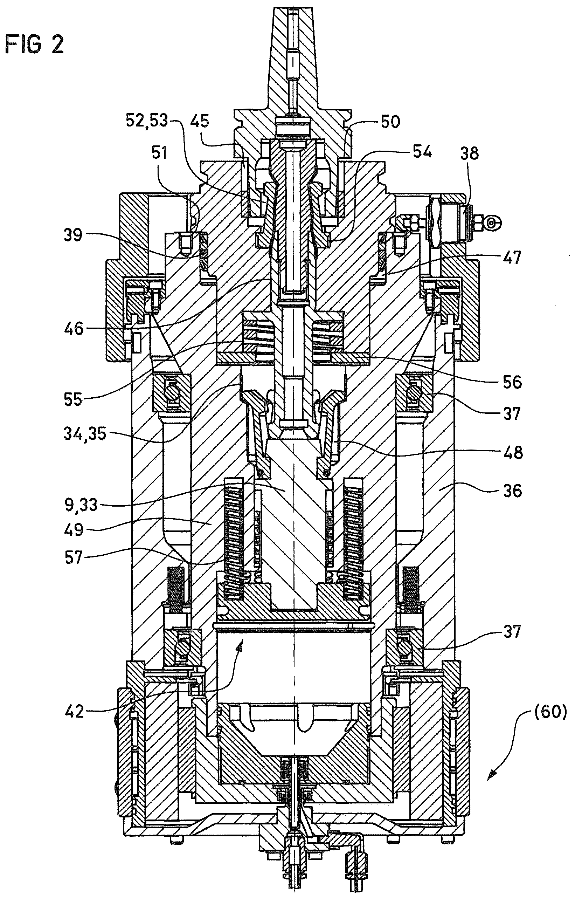

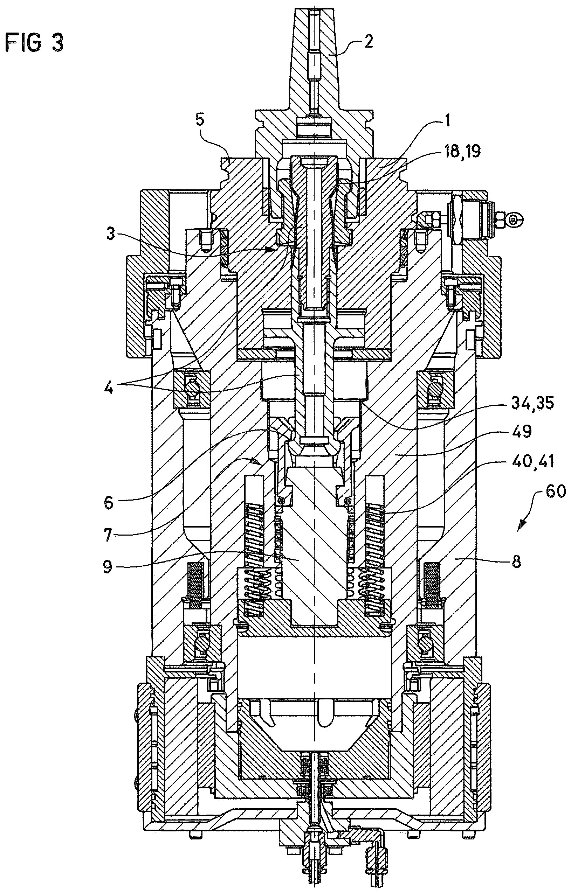

Im Folgenden wird die Funktionsweise des vorstehend beschriebenen Wuchtadapters 1 erläutert (Anm.: FIG 1 zeigt den Wuchtadapter 1 in seiner Lösestellung; FIG 2 zeigt den Wuchtadapter 1 in einer Zwischenstellung; FIG 3 zeigt den Wuchtadapter 1 in seiner Spannstellung):
Über den z.B. durch Druckluft oder ein anderes Druckfluid beaufschlagten Kolben 43 ist das zweite Betätigungselement 9 sowie - gedrückt über die obere Stirnseite des Zugkörpers 33 der zweiten Spannvorrichtung 7 bzw. zweiten Betätigungselements 9 - das erste Betätigungselement 4 (in der Lösestellung FIG 1) nach oben gedrückt.

In der gezeigten Lösestellung (FIG 1) befindet sich die zweite Spannzange 27 in gelöstem Zustand, wobei so die vorderen/oberen zweiten Spannbereiche 29 der zweiten Spannzange 27 radial nach außen gekippt sind - und den Knauf 6 am unteren Ende der zweiten Zugstange 16 des ersten Betätigungselements 4 freigeben. D.h., hier erfolgt kein - formschlüssiger - Eingriff der zweiten Formschlusselemente 31 der zweiten Spannzungen 28 mit den Spannfunktionsflächen 6 am Knauf 6 am unteren Ende der zweiten Zugstange 16 des ersten Betätigungselements 4.

Das erste Betätigungselement 4 befindet sich so auch - mit dem durch Federkraft an den Anschlag im zylindrischen Durchgang 46 des Wuchtadaptergehäuseteils 5 gedrückten Anschlagelement 20 der zweiten Zugstange 16 - ebenfalls in Lösestellung (hier wird, wie die Fig.en 1 bis 3 zeigen, der Wuchtadapter 1 mittels der Halte- und/oder Verriegelungsvorrichtung 38 im Wuchtmaschinenelementgehäuseteil 49 gehalten) - wo so die vorderen/oberen ersten Spannbereiche 12 der ersten Spannzange 10 radial nach innen gekippt sind - und das zu spannende Bauteil 2 freigeben.

D.h., hier erfolgt kein - formschlüssiger - Eingriff der ersten Formschlusselemente 14 der ersten Spannzungen 11 mit dem inneren Spannabschnitt 53 in der zylindrischen inneren axialen Ausnehmung 52 des Wuchtadapters 1.

Wenn die von unten auf den Kolben 43 wirkende Kraft nachlässt, wird das zweite Betätigungselement 9 über die zwischen dem Wuchtmaschinenelementgehäuseteil 49 und dem Kolben 43 eingespannten Druckfedern 41 nach unten verschoben.

Dadurch gleiten die vorderen zweiten Spannbereiche 29 am freien vorderen Ende der federnden zweiten Spannzungen 28 der zweiten Spannzange 27 an den zweiten Führungs-/Kontaktflächen 35 bzw. der zweiten Kulisse 34 entlang, wodurch die vorderen Enden der federnden zweiten Spannzungen 28 radial nach innen an den Knauf 6 der zweiten Zugstange 16 gedrückt werden - und diesen greifen (Fig. 2).

Die erste Spannzange 10 ist noch geöffnet (, wurde bislang das erste Betätigungselement 4, da bislang noch nicht gegriffen, noch nicht axial (aus seiner Lösestellung) nach unten gezogen) - und das zu spannende Bauteil 2 ist noch frei.

D.h., in dieser ersten Spannphase wird zunächst nur die zweite Spannzange 27 betätigt/geschlossen - und so die Kopplung des zweiten 9 mit dem ersten Betätigungselement 4 bewerkstelligt. Damit kann jetzt - bei weiterer axialer Verschiebung des zweiten Betätigungselements 9 auch das erste Betätigungselement 4 (zusammen mit dem zweiten (gekoppelten) Betätigungselements 9) mitverschoben werden.

Jetzt auch kann die Halte- und/oder Verriegelungsvorrichtung 38 gelöst werden (vgl. Fig. 2) (, ist - durch Kopplung der beiden Betätigungselemente 4, 9 - der Wuchtadapter 1 gesichert gegen ein ungewolltes Herausfallen.)

Mit zunehmender Axialverschiebung des zweiten Betätigungselements 9 wird dann - wird das erste Betätigungselement 4 jetzt axial nach unten zusammen mit dem zweiten Betätigungselement 9 mitverschoben - auch die erste Spannzange 10 geschlossen (zweite Spannphase, vgl. Fig. 3).

D.h., hier jetzt werden die ersten Spannzungen 11 der ersten Spannzange 10 - geführt durch die erste Kulisse 18 bzw. die ersten Führungsflächen 19 - radial nach außen gedrückt und die erste Spannzange 10 greift zu. Das zu spannende Bauteil 2 wird gegriffen.

Mit weiter zunehmender Axialverschiebung der beiden Betätigungselemente 4, 9 werden das zu spannende Bauteil 2 und der Wuchtadapter 1 (axial entgegen der Kraft der (beiden) Druckfedern 24, 41) bis zu ihrem maximalen Einzug eingezogen (Spannstellung) - und so beide gespannt gehalten (vgl. Fig. 3) .

Durch Druckbeaufschlagung des Kolbens 43 kann der Lösevorgang in umgekehrter Weise erfolgen, wobei dann hier am Ende des Lösevorgangs (vgl. Fig. 1) dann auch wieder die Halte- und/oder Verriegelungsvorrichtung 38 verriegelt werden kann.

Das - jetzt "entspannte" bzw. gelöste - Bauteil 2 kann einfach entnommen werden. Der Wuchtadapter 1 bleibt - durch die halte- und/oder Verriegelungsvorrichtung 38 - gehalten

### - Spannsystem (1, 8) mit Wuchtadapter 1 und Wuchtmaschinenspindel 8 (zweite Ausführung, FIGen 4 bis 5)

Der Wuchtadapter 1 nach dieser zweiten Ausführungsform ist im Wesentlichen baugleich des zuvor beschriebenen ersten Wuchtadapters 1 (vgl. Fig.en 1 bis 3). (Baugleiche Bauteile zeigen die Figuren und werden, um Wiederholungen zu vermeiden, nicht mehr wiederholt).

Wesentlich anders als beim ersten Wuchtadapter 1 (vgl. Fig.en 1 bis 3), ist beim (zweiten) Wuchtadapter 1 (vgl. Fig.en 4 bis 5) die erste Verspannung 23 im Wuchtadapter 1 ausgebildet - nämlich hier als entgegen dem Lösen bzw. der Lösebetätigung/Lösebetätigungsrichtung gerichtete Vorspannung 23.

Sie spannt die erste Spannvorrichtung 3 vor - und kann so gewährleisten, dass - auch bei Lösestellung des zweiten Betätigungselements 9 - die erste Spannvorrichtung 3 weiterhin gespannt - und das zu spannende Bauteil 2 weiterhin an dem Wuchtadapter 1 gespannt/gehalten bleibt.

Bauteil 2 und Wuchtadapter 1 bilden quasi eine (vorgespannte) Einheit und können - als vorgespannter (gemeinsamer) Spannsatz - als Einheit gewechselt/gerüstet werden.

Dazu ist, wie die Fig.en 4 bis 5, zeigen, eine Druckfeder 24 (in Sacklöcher 57 aufgenommen) zwischen Abstützelement 20 und Wuchtadaptergehäuseteil 5 derart eingebracht, dass das erste Betätigungselement 4 axial nach unten weg vom Wuchtadaptergehäuseteil 5 gedrückt wird - und so die erste Spannzange 10 betätigt bzw. geschlossen wird. Das bereits in den Wuchtadapter 1 eingesetzte Bauteil 2 kann so im Wuchtadapter 1 vorgespannt werden.

Auch anders als beim ersten Wuchtadapter 1 (vgl. Fig.en 1 bis 3), sieht der Wuchtadapter 1 hier, wie die Fig.en 4 bis 5 zeigen, keine Halte- und/oder Verriegelungsvorrichtung 38 vor. Der Wuchtadapter 1 wird hier "alleine"/einzig nur über die zweite Spannvorrichtung 7 im Wuchtmaschinenelementgehäuseteil 49 gehalten.

### Funktionsweise

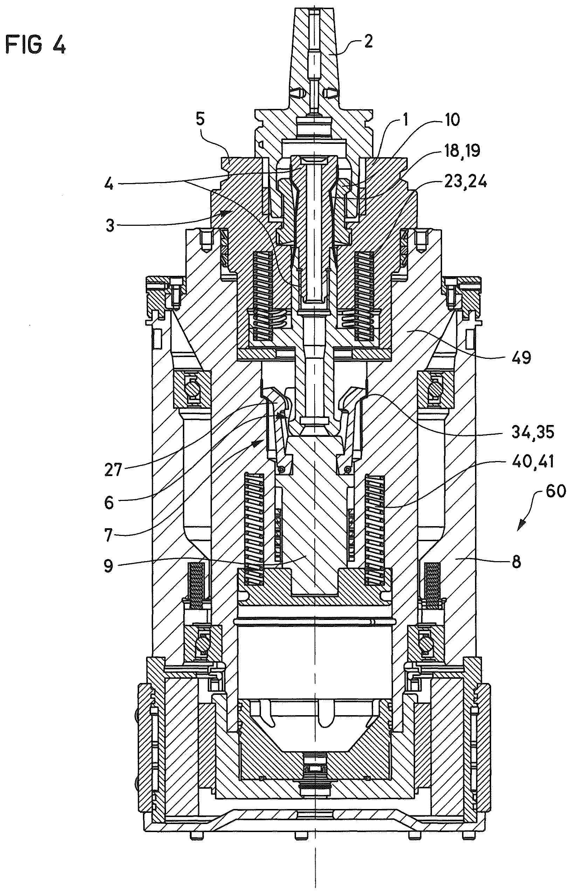

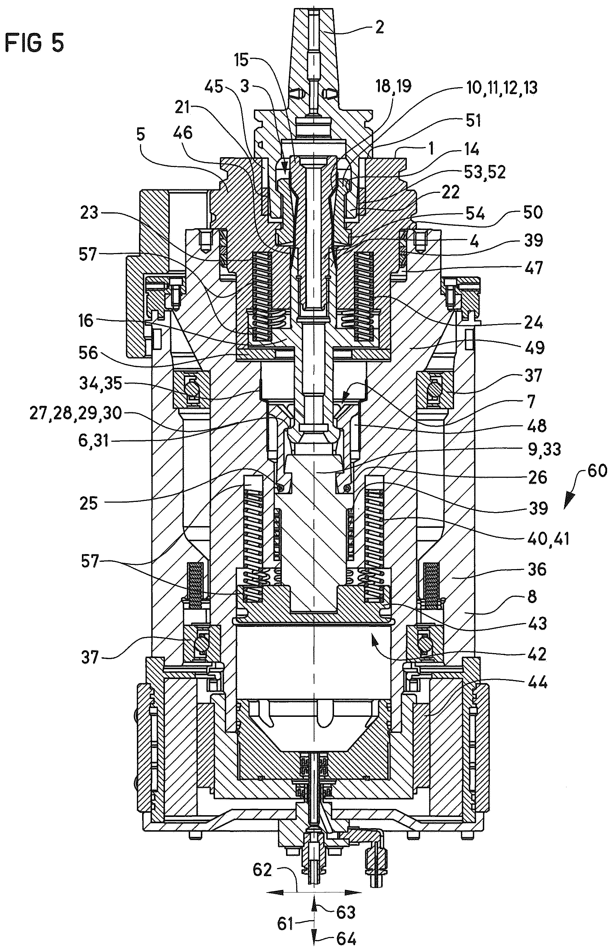

Im Folgenden wird die Funktionsweise des vorstehend beschriebenen Wuchtadapters 1 erläutert (Anm.: FIG 4 zeigt den Wuchtadapter 1 in seiner Lösestellung; FIG 5 zeigt den Wuchtadapter 1 in seiner Spannstellung):

Über den z.B. durch Druckluft oder ein anderes Druckfluid beaufschlagten Kolben 43 ist auch hier das zweite Betätigungselement 9 nach oben gedrückt.

In der gezeigten Lösestellung (FIG 4) befindet sich die zweite Spannzange 27 in gelöstem Zustand, wobei so die vorderen/oberen zweiten Spannbereiche 29 der zweiten Spannzange 27 radial nach außen gekippt sind - und den Knauf 6 am unteren Ende der zweiten Zugstange 16 des ersten Betätigungselements 4 freigeben.

D.h., hier erfolgt kein - formschlüssiger - Eingriff der zweiten Formschlusselemente 31 der zweiten Spannzungen 28 mit den Spannfunktionsflächen 6 am Knauf 6 am unteren Ende der zweiten Zugstange 16 des ersten Betätigungselements 4.

Das erste Betätigungselement 4 befindet sich - durch Federkraft der ersten Verspannung 23 (Vorspannung) - hier in Spannstellung, wo so die vorderen/oberen ersten Spannbereiche 12 der ersten Spannzange 10 radial nach außen gekippt sind - und das zu spannende Bauteil 2 am Wuchtadapter 1 spannen.

D.h., hier erfolgt ein - formschlüssiger - Eingriff der ersten Formschlusselemente 14 der ersten Spannzungen 11 mit dem inneren Spannabschnitt 53 in der zylindrischen inneren axialen Ausnehmung 52 des Wuchtadapters 1.

Das zu spannende Bauteil 2 und der Wuchtadapter 1 bilden den vorgespannten Spannsatz.

Wenn die von unten auf den Kolben 43 wirkende Kraft nachlässt, wird das zweite Betätigungselement 9 über die zwischen dem Wuchtmaschinenelementgehäuseteil 49 und dem Kolben 43 eingespannten Druckfedern 41 nach unten verschoben.

Dadurch gleiten die vorderen zweiten Spannbereiche 29 am freien vorderen Ende der federnden zweiten Spannzungen 28 der zweiten Spannzange 27 an den zweiten Führungs-/Kontaktflächen 35 bzw. der zweiten Kulisse 34 entlang, wodurch die vorderen Enden der federnden zweiten Spannzungen 28 radial nach innen an den Knauf 6 der zweiten Zugstange 16 gedrückt werden - und diesen greifen (Fig. 5). Die Kopplung des zweiten 9 mit dem ersten Betätigungselement 4 ist passiert.

Mit weiter zunehmender Axialverschiebung - jetzt der beiden - Betätigungselemente 4, 9 - werden das zu spannende Bauteil 2 und der Wuchtadapter 1 bis zu ihrem maximalen Einzug eingezogen (Spannstellung) - und so beide gespannt gehalten (vgl. Fig. 5).

Durch Druckbeaufschlagung des Kolbens kann der Lösevorgang in umgekehrter Weise erfolgen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen.

### Bezugszeichenliste:

- 1: Wucht- oder Messadapter, Spannadapter
- 2: (zu spannendes) Bauteil, Werkzeughalter, Werkstück
- 3: erste Spannvorrichtung
- 4: erstes Betätigungselement
- 5: (Spann-/Wuchtadapter-)Gehäuseteil
- 6: Spannfunktionsflächen, Knauf bzw. Außenfläche des Knaufs
- 7: zweite Spannvorrichtung
- 8: Maschinenelement, Wuchtmaschinen-/Antriebsspindel
- 9: zweites Betätigungselement
- 10: erste Spannzange
- 11: erste Spannzungen
- 12: erster Spannbereich
- 13: erste Spannklaue
- 14: Formschlusselement (der ersten Spannklauen)
- 15: erste Betätigungsteilelement (des ersten Betätigungselements), erste Zugstange
- 16: zweites Betätigungsteilelement (des ersten Betätigungselements), zweite Zugstange
- 18: erste (Führungs-)Kulisse
- 19: erste Kontaktflächen (an der ersten (Führung-)Kulisse)
- 20: Anschlags-/Abstützelement, Flansch
- 21: Zentrierelement, Kugelbuchse, Lagerbuchse
- 22: HSK-/kegelige Schnittstelle, (konischer) Schaft
- 23: erste Verspannung
- 24: Verspannungselement, Federelement, Druckfeder (von 23)
- 25: Ringfeder
- 26: (ringförmige) Ausnehmung (an 33)
- 27: zweite Spannzange
- 28: zweite Spannzungen
- 29: zweiter Spannbereich
- 30: zweite Spannklaue
- 31: Formschlusselement (der zweiten Spannklauen)
- 33: Betätigungsteilelement (des zweiten Betätigungselements), Zugkörper
- 34: zweite (Führungs-)Kulisse
- 35: zweite Kontaktflächen (an der zweiten (Führung-)Kulisse)
- 36: Maschinenelementgehäuse, Maschinenspindelgehäuse
- 37: Wälzlager
- 38: (mechanische) Halte- und/oder Verriegelungsvorrichtung
- 39: zweites Zentrierelement, Kugel-/Lagerbuchse, Kugelkäfig
- 40: zweite Verspannung
- 41: Verspannungselement, Federelement, Druckfeder (von 40)
- 42: (mechanische, pneumatische, hydraulische) (Verschiebe-) Vorrichtung
- 43: Kolben (von 42)
- 44: Antriebseinheit, Hohlwellenmotor
- 45: (zylindrische) Aufnahmeöffnung (von 5)
- 46: (zylindrischer) Durchgang (von 5)
- 47: (zylindrische) Aufnahmeöffnung (von 49)
- 48: (zylindrischer) Durchgang (von 49)
- 49: ((Wucht-)Maschinenelement-)Gehäuseteil
- 50: Auflageflansch (von 2)
- 51: Auflageflansch (von 1)
- 52: axiale Ausnehmung
- 53: (innerer) Spannabschnitt
- 54: ringförmige Ausnehmung (in 46)
- 55: Ausnehmung/Durchmessererweiterung (in 5)
- 56: Lochscheibe
- 57: Sackloch
- 60: Maschinenelement, Auswucht- oder Messmaschine, Wuchtvorrichtung, Messvorrichtung, Vorrichtung zu einer Fertigung und/oder Formgebung eines Bauteils
- 61: axial, Axialrichtung
- 62: radial, Radialrichtung
- 63: Löserichtung
- 64: Einzugs-/Spannrichtung

## Patentansprüche

1. **Spannadapter** zum Spannen eines Bauteils mit einem (Spannadapter-)Gehäuseteil, einer ersten in dem (Spannadapter-)Gehäuseteil aufgenommenen, das Bauteil spannbaren Spannvorrichtung und einem ersten die erste Spannvorrichtung betätigbaren Betätigungselement,
**dadurch gekennzeichnet, dass**
das erste Betätigungselement Spannfunktionsflächen aufweist, über welche das erste Betätigungselement - mittels einer zweiten Spannvorrichtung eines Maschinenelements einer Bearbeitungs- und/oder Messmaschine - mit einem zweiten die zweite Spannvorrichtung betätigbaren Betätigungselement bei Betätigung des zweiten Betätigungselements koppelbar bzw. lösbar ist, wodurch das erste Betätigungselement dann mittels des zweiten Betätigungselements betätigbar ist und dabei bei der Betätigung des zweiten Betätigungselements auch der Spannadapter an dem Maschinenelement spann- bzw. lösbar ist.

2. **Spannadapter** nach mindestens einem der voranstehenden Ansprüche,
**dadurch gekennzeichnet, dass**
die erste Spannvorrichtung eine erste Spannzange aufweist, insbesondere mit einem ersten hülsenförmigen Sockel und/oder mehrere in Umfangsrichtung durch axiale Schlitze voneinander getrennte, an den ersten hülsenförmigen Sockel angebundene, radial federnde erste Spannzungen mit einem dem zu spannenden Bauteil zugeordneten vorderen ersten Spannbereich oder mit mehrere in Umfangsrichtung verteilt anordenbare separate erste Spannzungen mit einem dem zu spannenden Bauteil zugeordneten vorderen ersten Spannbereich.

3. **Spannadapter** nach mindestens einem der voranstehenden Ansprüche,
**dadurch gekennzeichnet, dass**
der hülsenförmigen Sockel oder die separaten Spannzungen in dem (Spannadapter-)Gehäuseteil gehalten ist.

4. **Spannadapter** nach mindestens einem der voranstehenden Ansprüche,
**dadurch gekennzeichnet, dass**
in dem vorderen ersten Spannbereich der ersten Spannzungen bzw. der ersten Spannzange erste das Bauteil spannbare Spannklauen ausgebildet sind.

5. **Spannadapter** nach mindestens einem der voranstehenden Ansprüche,
**dadurch gekennzeichnet, dass**
die ersten Spannklauen radial außenliegende Formschlusselemente aufweist.

6. **Spannadapter** nach mindestens einem der voranstehenden Ansprüche,
**dadurch gekennzeichnet, dass**
das erste Betätigungselement mehrteilig mit mehreren, insbesondere zumindest zwei, miteinander verbindbaren, insbesondere verschraubbaren, und als Zugstangen ausgebildeten, Betätigungsteilelementen ausgebildet ist.

7. **Spannadapter** nach mindestens einem der voranstehenden Ansprüche,
**dadurch gekennzeichnet, dass**
das erste Betätigungselement bzw. die Betätigungsteilelemente bzw. Zugstangen des ersten Betätigungselements relativ gegenüber dem (Spannadapter-)Gehäuseteil und axial verschieblich in dem (Spannadapter-)Gehäuseteil aufgenommen ist bzw. sind.

8. **Spannadapter** nach mindestens einem der voranstehenden Ansprüche,
**dadurch gekennzeichnet, dass**
das erste Betätigungsteileelement, insbesondere radial äußere und als erste Führungskulisse für die erste Spannvorrichtung bzw. die ersten Spannzungen der ersten Spannzange wirkende, Kontaktflächen zur Führung der ersten Spannvorrichtung bzw. der ersten Spannzungen der ersten Spannzange aufweist.

9. **Spannadapter** nach mindestens einem der voranstehenden Ansprüche,
**dadurch gekennzeichnet, dass**
die erste Führungskulisse bzw. die ersten Kontaktflächen derart ausgebildet sind, dass sie - bei Kontakt mit den ersten Spannzungen der ersten Spannzange - diese zumindest bereichsweise, insbesondere im ersten Spannbereich, radial verschieben, wodurch insbesondere die ersten Spannklauen in einem Formschlusseingriff mit dem zu spannenden Bauteil bringbar sind.

10. **Spannadapter** nach mindestens einem der voranstehenden Ansprüche,
**dadurch gekennzeichnet, dass**
das zweite Betätigungsteileelement, insbesondere in einem Endbereich, die Spannfunktionsflächen, insbesondere ausgebildet in Form eines Knaufs bzw. an einer Außenfläche eines Knaufs, ausbildet.

11. **Spannadapter** nach mindestens einem der voranstehenden Ansprüche,
**dadurch gekennzeichnet, dass**
das erste Betätigungselement, insbesondere das zweite Betätigungsteilelement, ein Anschlagselement aufweist, welches bei Betätigung des ersten Betätigungselements in Kontakt mit dem (Spannadapter-)Gehäuseteil bringbar ist und dieses dabei axial verschieben kann.

12. **Spannadapter** nach mindestens einem der voranstehenden Ansprüche,
**gekennzeichnet, durch**
ein erstes Zentrierelement, insbesondere ein, insbesondere in einer Aufnahmeöffnung des (Spannadapter-)Gehäuseteils aufgenommenes, hülsenförmiges Zentrierelement für eine zentrierte Aufnahme des zu spannenden Bauteils, insbesondere eines Gesamtwerkzeugs mit einer kegelförmigen Schnittstelle, an dem **Spannadapter.**

13. **Spannadapter** nach mindestens einem der voranstehenden Ansprüche,
**gekennzeichnet, durch**
eine erste Verspannung, insbesondere aufweisend ein Verspannungselement, beispielsweise ein Federelement, welche das erste Betätigungselement gegen das (Spannadapter-)Gehäuseteil verspannt.

14. **Spannadapter** nach mindestens einem der voranstehenden Ansprüche,
**gekennzeichnet, durch**
die erste Verspannung ein Verspannungselement, insbesondere ein Federelement, aufweist, welches funktional und wirkend zwischen dem ersten Betätigungselement und dem (Spannadapter-)Gehäuseteil angeordnet ist.

15. **Spannadapter** nach mindestens einem der voranstehenden Ansprüche,
**dadurch gekennzeichnet, durch**
eine erste Verspannkraft der ersten Verspannung in Abhängigkeit des zu spannenden Bauteils ausgewählt ist.

16. **Maschinenelement** zum Spannen eines ein Bauteil spannbaren Spannadapters, insbesondere des **Spannadapters** nach einem der voranstehenden Ansprüche, mit einem (Maschinenelement-)Gehäuseteil,
**gekennzeichnet durch,**
eine zweite in dem (Maschinenelement-)Gehäuseteil aufgenommene Spannvorrichtung, mittels welcher ein erstes Betätigungselement einer ersten Spannvorrichtung des ein Bauteil spannbaren Spannadapters spann- bzw. lösbar ist, und ein zweites die zweite Spannvorrichtung betätigbares Betätigungselement, wodurch das erste Betätigungselement dann mittels des zweiten Betätigungselements betätigbar ist und dabei/bei der Betätigung des zweiten Betätigungselements auch der Spannadapter an dem Maschinenelement spann- bzw. lösbar ist.

17. **Maschinenelement** nach mindestens einem der voranstehenden Ansprüche,
**dadurch gekennzeichnet, dass**
die zweite Spannvorrichtung eine zweite Spannzange aufweist, insbesondere mit einem zweiten hülsenförmigen Sockel und/oder mehrere in Umfangsrichtung durch axiale Schlitze voneinander getrennte, an den ersten hülsenförmigen Sockel angebundene, radial federnde zweite Spannzungen mit einem dem zu spannenden ersten Betätigungselement zugeordneten vorderen zweiten Spannbereich oder mit mehrere in Umfangsrichtung verteilt anordenbare separate zweite Spannzungen mit einem dem zu spannenden ersten Betätigungselement zugeordneten vorderen zweiten Spannbereich.

18. **Maschinenelement** nach mindestens einem der voranstehenden Ansprüche,
**dadurch gekennzeichnet, dass**
in dem vorderen zweiten Spannbereich zweite das erste Betätigungselement spannbare Spannklauen, insbesondere mit Formschlusselemente für einen Formschluss mit den Spannfunktionsflächen des ersten Betätigungselements, ausgebildet sind.

19. **Maschinenelement** nach mindestens einem der voranstehenden Ansprüche,
**dadurch gekennzeichnet, dass**
die zweiten Spannzungen, insbesondere unter Verwendung eines Spannelements, insbesondere einer Ringfeder, gegen das zweite Betätigungselement verspannt gehalten werden.

20. **Maschinenelement** nach mindestens einem der voranstehenden Ansprüche,
**dadurch gekennzeichnet, dass**
das zweite Betätigungselement mehrteilig mit mehreren, insbesondere zumindest zwei, miteinander verbindbaren, insbesondere verschraubbaren, Betätigungsteilelementen ausgebildet ist.

21. **Maschinenelement** nach mindestens einem der voranstehenden Ansprüche,
**dadurch gekennzeichnet, dass**
das (Maschinenelement-)Gehäuseteil, insbesondere radial innere und als zweite Führungskulisse für die zweite Spannvorrichtung bzw. die zweiten Spannzungen der zweiten Spannzange wirkende, zweite Kontaktflächen zur Führung der zweiten Spannvorrichtung bzw. der zweiten Spannzungen der zweiten Spannzange aufweist.

22. **Maschinenelement** nach mindestens einem der voranstehenden Ansprüche,
**dadurch gekennzeichnet, dass**
die zweite Führungskulisse bzw. die zweiten Kontaktflächen derart ausgebildet sind, dass sie - bei Kontakt mit den zweiten Spannzungen der zweiten Spannzange - diese zumindest bereichsweise, insbesondere im zweiten Spannbereich, radial verschieben, wodurch insbesondere die zweiten Spannklauen in einem Formschlusseingriff mit den Spannfunktionsflächen des ersten Betätigungselements bringbar sind.

23. **Maschinenelement** nach mindestens einem der voranstehenden Ansprüche,
**dadurch gekennzeichnet, dass**
das zweite Betätigungselement relativ gegenüber dem (Maschinenelement-)Gehäuseteil und axial verschieblich in dem (Maschinenelement-)Gehäuseteil aufgenommen ist.

24. **Maschinenelement** nach mindestens einem der voranstehenden Ansprüche,
**gekennzeichnet, durch**
ein Maschinenelementgehäuse, in welchem das (Maschinenelement-)Gehäuseteil, insbesondere unter Verwendung von Wälzlager, insbesondere drehbar, aufgenommen bzw. gelagert ist.

25. **Maschinenelement** nach mindestens einem der voranstehenden Ansprüche,
**gekennzeichnet, durch**
eine Halte- und/oder Verriegelungsvorrichtung, unter Verwendung der der Spannadapter in dem (Maschinenelement-)Gehäuseteil verriegelt gehalten werden kann und/oder eine Verschraubung, unter Verwendung derer der Spannadapter an dem (Maschinenelement-)Gehäuseteil verschraubt werden kann.

26. **Maschinenelement** nach mindestens einem der voranstehenden Ansprüche,
**dadurch gekennzeichnet, dass**
die Halte- und/oder Verriegelungsvorrichtung an dem Maschinenelementgehäuse oder an dem (Maschinenelement-)Gehäuseteil befestigt ist.

27. **Maschinenelement** nach mindestens einem der voranstehenden Ansprüche,
**dadurch gekennzeichnet, dass**
die Halte- und/oder Verriegelungsvorrichtung mechanisch betätigbar ist, wobei insbesondere bei Betätigung der Spannadapter mittels Formschluss in dem (Maschinenelement-)Gehäuseteil verriegelt gehalten werden kann.

28. **Maschinenelement** nach mindestens einem der voranstehenden Ansprüche,
**dadurch gekennzeichnet, dass**
ein zweites Zentrierelement, insbesondere einen, insbesondere in einer Aufnahmeöffnung des (Maschinenelements-)Gehäuseteils aufgenommenen, Kugelkäfig, für eine zentrierte Aufnahme des **Spannadapters** an dem **Maschinenelement.**

29. **Maschinenelement** nach mindestens einem der voranstehenden Ansprüche,
**dadurch gekennzeichnet, dass**
eine zweite, insbesondere gleich oder in Gegenwirkung der ersten Verspannung wirkende, Verspannung, insbesondere aufweisend ein Verspannungselement, insbesondere ein Federelement, beispielsweise eine Druckfeder, welche das zweite Betätigungselement, insbesondere dessen zweites Betätigungsteilelements gegen das (Maschinenelement-)Gehäuseteil verspannt.

30. **Maschinenelement** nach mindestens einem der voranstehenden Ansprüche,
**dadurch gekennzeichnet, dass**
die zweite Verspannung ein Verspannungselement, insbesondere ein Federelement, aufweist, welches funktional und wirkend zwischen dem zweiten Betätigungselement, insbesondere dessen zweiten Betätigungsteilelements, und dem (Maschinenelement-)Gehäuseteil angeordnet ist.

31. **Maschinenelement** nach mindestens einem der voranstehenden Ansprüche,
**dadurch gekennzeichnet, dass**
die erste Verspannkraft der ersten Verspannung und eine zweite Verspannnkraft der zweiten Verspannung, insbesondere unter Berücksichtigung des zu verspannenden Bauteils, aufeinander abgestimmt sind.

32. **Maschinenelement** nach mindestens einem der voranstehenden Ansprüche,
**dadurch gekennzeichnet, dass**
die erste Verspannkraft der ersten Verspannung und die zweite Verspannnkraft der zweiten Verspannung derart wirkend ausgebildet sind, dass sie in gleicher Richtung wirken.

33. **Maschinenelement** nach mindestens einem der voranstehenden Ansprüche,
**dadurch gekennzeichnet, dass**
die erste Verspannkraft der ersten Verspannung und die zweite Verspannnkraft der zweiten Verspannung derart wirkend ausgebildet sind, dass sie einander entgegenwirken.

34. **Maschinenelement** nach mindestens einem der voranstehenden Ansprüche,
**gekennzeichnet, durch**
eine, insbesondere pneumatisch oder hydraulisch oder mechanisch betreibbare, in dem (Maschinenelement-)Gehäuseteil aufgenommene Vorrichtung, mittels welcher das zweite Betätigungselement zum Spannen und/oder Lösen verschiebbar ist.

35. **Maschinenelement** nach mindestens einem der voranstehenden Ansprüche,
**dadurch gekennzeichnet, dass**
die Vorrichtung das zweite Betätigungselement gesteuert verschiebt.

36. **Maschinenelement** nach mindestens einem der voranstehenden Ansprüche,
**dadurch gekennzeichnet, dass**
die zweite Verspannung und die Vorrichtung derart eingerichtet und aufeinander abgestimmt sind, dass eine, insbesondere pneumatisch oder hydraulisch oder mechanisch aufgebrachte, Verschiebekraft der Vorrichtung gegen die zweite Verspannkraft wirkt.

37. **Spannsystem** zum Spannen eines Bauteils an einem Maschinenelement einer Bearbeitungs- und/oder Messmaschine mit einem **Spannadapter,** insbesondere nach einem der voranstehenden **Spannadapter**-Ansprüche, und dem **Maschinenelement,** insbesondere nach einem der voranstehenden **Maschinenelement**-Ansprüche, **dadurch gekennzeichnet, dass**
der **Spannadapter** ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbaren Betätigungselement sowie das **Maschinenelement** ein (Maschinenelement-)Gehäuseteil, eine zweite in dem (Maschinenelement-)Gehäuseteil aufgenommene Spannvorrichtung und ein zweites die zweite Spannvorrichtung betätigbaren Betätigungselement aufweisen,
**wobei**
das erste Betätigungselement mit dem zweiten Betätigungselement - bei Betätigung des zweiten Betätigungselements - derart miteinander koppelbar bzw. voneinander lösbar sind, dass - bei Betätigung des zweiten Betätigungselements - sowohl das Bauteil in dem Spannadapter als auch der Spannadapter an dem Maschinenelement spannbar bzw. lösbar sind.

38. **Spannsystem** zum Spannen eines Bauteils an einem Maschinenelement einer Bearbeitungs- und/oder Messmaschine mit einem **Spannadapter,** insbesondere nach einem der voranstehenden **Spannadapter**-Ansprüche, und dem **Maschinenelement,** insbesondere nach einem der voranstehenden **Maschinenelement**-Ansprüche, **dadurch gekennzeichnet, dass**
der **Spannadapter** ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbaren Betätigungselement sowie das **Maschinenelement** ein (Maschinenelement-)Gehäuseteil, eine zweite in dem (Maschinenelement-)Gehäuseteil aufgenommene Spannvorrichtung und ein zweites die zweite Spannvorrichtung betätigbaren Betätigungselement aufweisen,
**wobei**
das erste Betätigungselement mit dem zweiten Betätigungselement - durch Betätigung des zweiten Betätigungselements - derart miteinander koppelbar ist, dass
- bei Betätigung des zweiten Betätigungselements - sowohl das erste Betätigungselement als auch das zweite Betätigungselement betätigbar, insbesondere axial verschiebbar, sind und so das Bauteil mittels der ersten Spannvorrichtung an dem Spannadapter spannbar ist.

39. **Spannsystem** zum Spannen eines Bauteils an einem Maschinenelement einer Bearbeitungs- und/oder Messmaschine mit einem **Spannadapter,** insbesondere nach einem der voranstehenden **Spannadapter**-Ansprüche, und dem **Maschinenelement,** insbesondere nach einem der voranstehenden **Maschinenelement**-Ansprüche, das **Spannsystem** insbesondere nach dem voranstehenden **Spannsystem**-Anspruch,
**dadurch gekennzeichnet, dass**
der **Spannadapter** ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbaren Betätigungselement sowie das **Maschinenelement** ein (Maschinenelement-)Gehäuseteil, eine zweite in dem (Maschinenelement-)Gehäuseteil aufgenommene, das erste Betätigungselement spannbare Spannvorrichtung und ein zweites die zweite Spannvorrichtung betätigbaren Betätigungselement aufweisen,
**wobei** das erste Betätigungselement Spannfunktionsflächen aufweist, über welche das erste Betätigungselement mittels der zweiten Spannvorrichtung mit dem zweiten die zweite Spannvorrichtung betätigbaren Betätigungselement bei Betätigung des zweiten Betätigungselements koppelbar bzw. lösbar ist, wodurch so - bei Betätigung des zweiten Betätigungselements - sowohl das Bauteil in dem **Spannadapter** als auch der **Spannadapter** an dem **Maschinenelement** spannbar bzw. lösbar sind.

40. **Spannsystem** zum Spannen eines Bauteils an einem Maschinenelement einer Bearbeitungs- und/oder Messmaschine mit einem **Spannadapter,** insbesondere nach einem der voranstehenden **Spannadapter**-Ansprüche, und dem **Maschinenelement,** insbesondere nach einem der voranstehenden **Maschinenelement**-Ansprüche, das **Spannsystem** insbesondere nach dem voranstehenden **Spannsystem**-Anspruch,
**dadurch gekennzeichnet, dass**
der **Spannadapter** ein (Spannadapter-)Gehäuseteil, eine erste in dem (Spannadapter-)Gehäuseteil aufgenommene, das Bauteil spannbare Spannvorrichtung und ein erstes die erste Spannvorrichtung betätigbares Betätigungselement sowie das **Maschinenelement** ein (Maschinenelement-)Gehäuseteil, eine zweite in dem (Maschinenelement-)Gehäuseteil aufgenommene, das erste Betätigungselement spannbare Spannvorrichtung und ein zweites die zweite Spannvorrichtung betätigbares Betätigungselement aufweisen,
**wobei** das erste Betätigungselement Spannfunktionsflächen aufweist, über welche das erste Betätigungselement mittels der zweiten Spannvorrichtung mit dem zweiten die zweite Spannvorrichtung betätigbaren Betätigungselement bei Betätigung des zweiten Betätigungselements koppelbar bzw. lösbar ist, wodurch so - bei Betätigung des zweiten Betätigungselements - sowohl das erste Betätigungselement als auch das zweite Betätigungselement betätigbar, insbesondere axial verschiebbar, sind und so das Bauteil mittels der ersten Spannvorrichtung an dem **Spannadapter** spannbar ist

41. **Bearbeitungs- und/oder Messmaschine** zum Bearbeiten und/oder Vermessen eines Bauteils mit einem Spannadapter bzw. einem Maschinenelement jeweils nach einem der voranstehenden Spannadapter-Ansprüche bzw. **Maschinenelement-**Ansprüche und/oder einem **Spannsystem** nach einem der voranstehenden **Spannsystem**-Ansprüche, wobei das Bauteil bei der Bearbeitung und/oder Vermessung mittels des **Spannadapters** bzw. des **Spannsystems** an dem Maschinenelement der **Bearbeitungsmaschine** spannbar ist.

42. **Verfahren** zum Spannen oder Lösens eines Bauteils an einem Maschinenelement einer Bearbeitungs- und/oder Messmaschine mittels eines Spannmechanismus, insbesondere unter Verwendung eines **Spannadapters,** eines **Maschinenelements,** eines **Spannsystems** und/oder einer **Bearbeitungs- und/oder Messmaschine** nach jeweils einem der Spannadapter-, Maschinenelement-, Spannsystem- und/oder Bearbeitungs- und/oder Messmaschine-Ansprüche, **bei dem**
beim Spannen oder Lösen des Bauteils an einem Spannadapter mittels Betätigung des Spannmechanismus auch der Spannadapter selbst durch die Betätigung des Spannmechanismus an einem Maschinenelement der Bearbeitungsmaschine spannbar bzw. lösbar ist.

43. **Verfahren** zum Spannen oder Lösens eines Bauteils an einem Maschinenelement einer Bearbeitungs- und/oder Messmaschine mittels eines ersten, durch ein erstes Betätigungselement betätigbaren Spannmechanismus und mittels eines zweiten, durch ein zweites Betätigungselement betätigbaren Spannmechanismus, insbesondere unter Verwendung eines **Spannadapters,** eines **Maschinenelements,** eines **Spannsystems** und/oder einer **Bearbeitungs- und/oder Messmaschine** nach jeweils einem der Spannadapter-, Maschinenelement-, Spannsystem- und/oder Bearbeitungs- und/oder Messmaschine-Ansprüche,
**bei dem**
das erste Betätigungselement mit dem zweiten Betätigungselement - durch Betätigung des zweiten Betätigungselements - derart miteinander gekoppelt werden und dann
- bei Betätigung des zweiten Betätigungselements - sowohl das erste Betätigungselement als auch das zweite Betätigungselement betätigbar, insbesondere axial verschiebbar, sind und dabei das Bauteil mittels des ersten Spannmechanismus an dem **Spannadapter** spannbar ist.

44. **Verfahren** zum Spannen oder Lösens eines Bauteils nach mindestens einem der voranstehenden Ansprüche,
**dadurch gekennzeichnet, dass**
bei der Betätigung des Spannmechanismus bzw. bei der Betätigung des zweiten Betätigungselements das Spannen bzw. das Lösen des Spannadapters und des Bauteils sequenziell erfolgt.

45. **Verfahren** zum Spannen oder Lösens eines Bauteils nach mindestens einem der voranstehenden Ansprüche,
**dadurch gekennzeichnet, dass**
bei der Betätigung des Spannmechanismus bzw. bei der Betätigung des zweiten Betätigungselements das Spannen bzw. das Lösen des Spannadapters und des Bauteils gleichzeitig erfolgt.

46. **Verfahren** zum Spannen oder Lösens eines Bauteils nach mindestens einem der voranstehenden Ansprüche,
**dadurch gekennzeichnet, dass**
bei der Betätigung des Spannmechanismus bzw. bei der Betätigung des zweiten Betätigungselements das Lösen des an dem Spannadapter gespannten Bauteils, insbesondere unter Verwendung einer bzw. der ersten Verspannung, verhindert wird.

47. **Verfahren** zum Spannen oder Lösens eines Bauteils nach mindestens einem der voranstehenden Ansprüche,
**dadurch gekennzeichnet, dass**
bei der Betätigung des Spannmechanismus bzw. bei der Betätigung des zweiten Betätigungselements das Bauteil relativ zum (Spannadapter-)Gehäuseteil und/oder der Spannadapter relativ zum (Maschinenelement-)Gehäuseteil axial verschoben wird.

48. **Verfahren** zum Spannen oder Lösens eines Bauteils nach mindestens einem der voranstehenden Ansprüche,
**dadurch gekennzeichnet, dass**
beim Spannen durch Betätigung des zweiten Betätigungselements, insbesondere durch dessen relatives axiales Verschieben gegen das (Maschinenelement-)Gehäuseteil in einer Einzugs-/Spannrichtung, in einer ersten Spannphase die zweite Spannvorrichtung das erste Betätigungselement spannt bzw. greift.

49. **Verfahren** zum Spannen oder Lösens eines Bauteils nach mindestens einem der voranstehenden Ansprüche,
**dadurch gekennzeichnet, dass**
bei dem Spannen durch Betätigung des zweiten Betätigungselements, insbesondere durch dessen relatives axiales Verschieben gegen das (Maschinenelement-)Gehäuseteil in der Einzugs-/Spannrichtung, dann in einer zweiten, der ersten nachfolgenden Spannphase das erste, durch die zweite Spannvorrichtung gespannte Betätigungselement ebenfalls in Einzugs-/Spannrichtung des zweiten Betätigungselements axial verschoben wird.

50. **Verfahren** zum Spannen oder Lösens eines Bauteils nach mindestens einem der voranstehenden Ansprüche,
**dadurch gekennzeichnet, dass**
in dieser zweiten Spannphase das zu spannende Bauteil mittels der durch das erste Betätigungselement betätigten ersten Spannvorrichtung an dem Spannadapter gespannt wird und dann durch weitere Betätigung des zweiten Betätigungselements, insbesondere durch dessen relatives axiales Verschieben gegen das (Maschinenelement-)Gehäuseteil in der Einzugs-/Spannrichtung, der Spannadapter an dem Maschinenelement gespannt wird.

51. **Verfahren** zum Spannen oder Lösens eines Bauteils nach mindestens einem der voranstehenden Ansprüche,
**dadurch gekennzeichnet, dass**
in dieser zweiten Spannphase, in welcher das zu spannende Bauteil bereits durch erste Spannvorrichtung an dem Spannadapter vorverspannt ist, nur mehr der Spannadapter an dem Maschinenelement gespannt wird.

52. **Verfahren** zum Spannen oder Lösens eines Bauteils nach mindestens einem der voranstehenden Ansprüche,
**dadurch gekennzeichnet, dass**
beim Lösen durch Betätigung des zweiten Betätigungselements, insbesondere durch dessen relatives axiales Verschieben gegen das (Maschinenelement-)Gehäuseteil in einer Löserichtung, das erste Betätigungselement und das zweite Betätigungselement in Löserichtung axial verschoben wird, wodurch zunächst nur das an dem Spannadapter gespannte Bauteil gelöst bzw. freigegeben wird und anschließend erst der an dem Maschinenelement gespannte Spannadapter gelöst bzw. freigegeben wird.

53. **Verfahren** zum Spannen oder Lösens eines Bauteils nach mindestens einem der voranstehenden Ansprüche,
**dadurch gekennzeichnet, dass**
beim Lösen durch Betätigung des zweiten Betätigungselements, insbesondere durch dessen relatives axiales Verschieben gegen das (Maschinenelement-)Gehäuseteil in einer Löserichtung, das zweite Betätigungselement in Löserichtung axial verschoben wird, wodurch der an dem Maschinenelement gespannte Spannadapter gelöst bzw. freigegeben wird.
